(19) Europäisches Patentamt
European Patent Office
Office européen des brevets

(11) **EP 3 021 096 B1**

(12) **EUROPEAN PATENT SPECIFICATION**

(45) Date of publication and mention
of the grant of the patent:
**05.04.2017 Bulletin 2017/14**

(51) Int Cl.:
*G01J 3/51* (2006.01)    *G01J 3/02* (2006.01)
*G01J 3/52* (2006.01)    *G01J 3/50* (2006.01)

(21) Application number: **14003792.0**

(22) Date of filing: **11.11.2014**

(54) **Colorimeter calibration**

Kolorimeterkalibrierung

Étalonnage de colorimètre

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.05.2016 Bulletin 2016/20**

(73) Proprietor: **Instrument Systems Optische
Messtechnik Gmbh
81673 München (DE)**

(72) Inventors:
• **Arenhold, Kurt**
**81927 München (DE)**
• **Khrustalev, Peter**
**81477 München (DE)**
• **Häring, Reto**
**81369 München (DE)**

(74) Representative: **Samson & Partner Patentanwälte
mbB
Widenmayerstraße 6
80538 München (DE)**

(56) References cited:
EP-A2- 0 570 003        US-A- 4 917 495
US-A1- 2007 139 644    US-A1- 2007 177 230
US-A1- 2014 300 753

• Yoshihiro Ohno ET AL: "Four-Color Matrix Method for Correction of Tristimulus Colorimeters", Proc., IS&T Fifth Color Imaging Conference, 1 January 1997 (1997-01-01), pages 301-305, XP055187676, Retrieved from the Internet: URL:http://www.chromapure.com/fourcolorcorrection.pdf [retrieved on 2015-05-06]
• Yoshihiro Ohno ET AL: "Four-Color Matrix Method for Correction of Tristimulus Colorimeters - Part 2", IS&T Sixth Color Imaging Conference, 1 January 1998 (1998-01-01), XP055187680, Retrieved from the Internet: URL:http://citeseerx.ist.psu.edu/viewdoc/download?doi=10.1.1.163.846&rep=rep1&type=pdf [retrieved on 2015-05-06]
• KOSZTYAN Z T ET AL: "Matrix-based color measurement corrections of tristimulus colorimeters", APPLIED OPTICS, OPTICAL SOCIETY OF AMERICA, WASHINGTON, DC; US, vol. 49, no. 12, 20 April 2010 (2010-04-20), pages 2288-2301, XP001553182, ISSN: 0003-6935
• I FRYC ET AL: "A spectrally tunable LED sphere source enables accurate calibration of tristimulus colorimeters", PROCEEDINGS OF SPIE, vol. 6158, 3 February 2006 (2006-02-03), XP055187951, ISSN: 0277-786X, DOI: 10.1117/12.675770

EP 3 021 096 B1

**Description**

**FIELD OF THE INVENTION**

The invention relates to the field of color-measurement, more specifically to the field of measuring values of primaries of a human standard-observer based color space, such as the tristimulus values X, Y, Z, or values of the primaries L* a* b* of the CIELAB color space, and in particular to the field of calibrating multi-filter based colorimeters, multi-filter based imaging colorimeters and to colorimeter systems that are based on RGB-imaging systems.

**BACKGROUND**

In the field of colorimetry two basic measurement principles are known. In the first principle the light is measured spectrally resolved. Integration with weighting according to the eye sensitivity of the "standard observer" defined in the *CIE 1931 XYZ color space* are applied to receive the tristimuli values of XYZ. In the second principle the eye sensitivity is mimicked with a filtered photosensor. The filters are made either of bulk absorber (color glass filter) or with interference filters. A minimum of three filters is needed to measure up to the trichromaticity of human vision. Often a fourth filter is used to ease the technical realization of the double lobbed nature of the X channel. More channels are can be used to overcome technical limitations of the accuracy of the sensitivity response of the filter / sensor pair.

Kosztyán et al, "Matrix-based color measurement correction of tristimulus colorimeters", Applied Optics, Vol. 49, No. 12, 20 April 2010, p. 2288-2302 describe a measurement of tristimulus curves of a plurality of test light-sources with known tristimulus values (and therefore known chromaticity values) with a multi-input-channel colorimeter. Each input-channel of the colorimeter provides an output signal. These output signals are used to calculate three corrected tristimulus values by applying a matrix to these signals. The matrix maps the output signals to the tristimulus values. The matrix elements are determined by minimizing an arithmetic mean of the color-distances $\Delta E_{a,b}^{\star}$ of the L* a* b* color-space or an arithmetic mean of the chromaticity distances $\Delta(u,v)$ of the L* u* v* color space. These distances are provided as a function of the tristimulus values resulting from application of the matrix to the measured output-signals and known tristimulus values of the test-light sources.

US 2007/177230 A1 pertains to a method and apparatus for determining a color calibration for different spectral light inputs in an imaging apparatus measurement. Calibration or correction matrices for particular colors are calculated, using a "one-color" or a four-color calibration method. Also luminance scalings are created for each of the different colors. When testing a light source, a reference meter is used to obtain brightness and color data. From these measurement values so called reference ratios of color data are calculated. An imaging photometer records reference gray values for each color by using a red filter, a green filter and a blue filter. An R, G and B gray value is obtained for the first pixel in each of the three measurements taken with a different filter. Pixel ratios for each filter are obtained, wherein the pixel ratios correspond to the reference ratios. It is then determined which reference ratios are closest to the pixel ratios. Subsequently a new color calibration matrix is calculated.

Yoshihiro Ohno and Jonathan E. Hardis "Four-Color Matrix Method for Correction of Tristimulus Colorimeters" pertains to a method of calibrating a tristimulus colorimeters. The method utilizes only x/y coordinates and is indepdent of Y values. A correction matrix is obtained from the x/y values of the three primary colors and a white color of a display measured by a target instrument and a reference instrument.

**SUMMARY OF THE INVENTION**

According to a first aspect, a method of calibrating a colorimeter arranged to measure light with a sensor arrangement providing n sensings with different spectral sensitivities, wherein n is a number greater than or equal to four, wherein a sensing corresponds to the response of a sensor in the sensor arrangement, and measure that light in the form of three primaries of a human-standard-observer-based color space, wherein one of the three primaries is an achromatic primary is provided. The method comprises the steps of claim 1.

According to a second aspect, a colorimeter with the features of claim 13 is provided.

According to a third aspect, the colorimeter of the previous aspects is equipped with an imaging sensor. Each pixel can be treated as an individual colorimeter but resulting in a measurement of a spatially extended light distribution.

Other features are inherent in the disclosed methods and systems or will become apparent to those skilled in the art from the following description of examples and its accompanying drawings.

**GENERAL DESCRIPTION, ALSO OF OPTIONAL EMBODIMENTS OF THE INVENTION**

General comments on the method of calibrating a colorimeter

According to a first aspect a method of calibrating a colorimeter is provided. The term "colorimeter" refers generally to devices that measure color and luminosity of a certain spot illuminated with light. In particular, colorimeters that are arranged to mimic the color-perception of a human-standard-observer, providing readings of primaries of a human-standard-observer based color space are considered for the method.

The colorimeter is arranged to measure light with a sensor arrangement providing n sensings with different spectral sensitivities. The sensor arrangement comprises elements that convert light into electric signals (light sensors), such as photo diodes, CCD or CMOS sensors. Those photosensors are equipped for example with filters placed in a beam path from the light to the photosensors. For example, a photodiode-array, comprising six elements with separate beam paths leading to them, is provided. In this exemplary sensor arrangement, one specific spectral filter is provided in the beam path of each photodiode element. Another example to realize a sensor arrangement is to place tristimulus filters, in the beam path in front of a respective photosensor. The sensor arrangement of the colorimeter provides n sensings of light that is measured by the colorimeter, wherein n is a number greater or equal four. A sensing refers to a measurement of a particular quality of the light measured, for example, one sensing corresponds to the response of an $X_1$ sensor of the sensor arrangement, e.g. the photodiode response after the light was transmitted through an $X_1$ filter, and another sensing corresponds to the response of the $X_2$ sensor (having an $X_2$ filter). $X_1$ filters and $X_2$ filters mimic the response to of a human-standard-observer's eyes cone-cells in different spectral regions.

One of the primaries for which values are produced by the colorimeter is an achromatic primary. The achromatic primary of a human-standard-observer-based color space is the primary that yields rather the intensity of light rather than its color. Examples for human-standard-observer based color spaces are the X, Y, Z color space, where the X, Y and Z responses are the tristimulus values of a human-standard-observer and Y is the achromatic primary defined as luminance, the xyY color space with Y as the achromatic primary, the CIELAB L*, a*, b* color space, where L* is the achromatic primary, also referred to as "lightness", or the CIELUV L*, u*, v* color space, having the same achromatic primary L*.

In a first activity, m sets of n sensings are generated for m calibration illuminants with known values of the three primaries, wherein m is a number greater than n. Hence, n sensings are obtained for each calibration illuminant of altogether m calibration illuminants. The term "calibration illuminant" means, for example, a real light source used to illuminate a real colorimeter. However, also a simulated light source used in embodiments in which the calibration is simulated by a computer using a computer-model of a real colorimeter, shall be covered by the term "calibration illuminant". The values of the three primaries of the calibration illuminants are known, as they are either measured or predetermined. If the values of the three primaries are predetermined, the calibration illuminants have been, for example, calibrated beforehand to emit light with these primaries and/or chromaticity values.

In a second activity, a first set of calibration factors herein further referred to as the "chromaticity-optimized set of calibration factors" that yields chromaticity-optimized values of the primaries of the human-observer-based color space, when applied to signals measured by the sensings, is determined. The term "chromaticity-optimized set of calibration factors" as well as the term "chromaticity-optimized values of the primaries of the human-observer-based color space" is used in this document to make clear that this set of calibration factors resulting from the method for calibrating a colorimeter yields, when applied to the signals measured by the sensings, values of the primaries of the human-standard-observer based space with chromaticity values that have a minimal norm of chromaticity-distances for all the corresponding calibration illuminants.

The chromaticity-optimized set of calibration factors, is determined by minimizing a norm of chromaticity distances. The chromaticity-distances are the distances between (i) the chromaticity values retrieved by applying the set of calibration factors to the signals measured by the n sensings, and (ii) known chromaticity values for all calibration illuminants. To provide a particular example, the norm of the chromaticity distances is a mathematical norm, for example, given by a root-mean-square of these chromaticity-distances obtained for the calibration illuminants. This norm can be seen as an absolute value of the measurement error of the colorimeter.

By choosing a set of calibration factors that minimizes the norm of chromaticity distances, measurement errors of a colorimeter equipped with those calibration-factors with respect to chromaticity values are reduced. If a plurality of filters provide only a deficient filter function, e.g. due to production-related errors, those deficiencies can be compensated by the set chromaticity-optimized calibration-factors, resulting from these minimizations.

Choosing this set of calibration factors is, for example, achieved by iterative numerical methods, such as non-linear optimization algorithms. These methods vary a set of variable calibration-factors until the norm of the chromaticity-distances is minimal. Alternatively, the minimization of the norm of the chromaticity-distances can be achieved by using analytical mathematical methods such as the well-known Lagrange method.

An example for the determination of such a chromaticity-difference as a function of the set of calibration factors is given in the following:

A set of six sensings, obtained by measuring the calibration illuminant i (i is a number from 1 to m, wherein m is number of calibration illuminants), is given by the vector $s_i$, each vector component represents a measurement signal caused by the illuminant i,

$$s_i = \begin{pmatrix} X_{1i,LC} \\ X_{2i,LC} \\ Y_{i,LC} \\ Z_{i,LC} \\ K_{i,LC} \\ L_{i,LC} \end{pmatrix}$$

The sensings $X_{1i,LC}$, $X_{2i,LC}$, $Y_{i,LC}$, $Z_{i,LC}$, $K_{i,LC}$ and $L_{i,LC}$ stand for a sensings obtained by an $X_1$ filter and an $X_2$ filter (yielding the X tristimulus response) Y, Z tristimulus filters and two additional compensatory filters K and L for a certain calibration illuminant i, respectively. $M_{x/y}$ is a set of calibration factors, in this example a 3x6 Matrix with calibration factors $a_{11}$ to $a_{36}$.

$$M_{x/y} = \begin{pmatrix} a_{11} & a_{12} & a_{13} & a_{14} & a_{15} & a_{16} \\ a_{21} & a_{22} & a_{23} & a_{24} & a_{25} & a_{26} \\ a_{31} & a_{32} & a_{33} & a_{34} & a_{35} & a_{36} \end{pmatrix}$$

The set of calibration factors $M_{x/y}$ is transformed into the values of the primaries for illuminant i, namely: $X_i$, $Y_i$, $Z_i$:

$$\begin{pmatrix} X_i \\ Y_i \\ Z_i \end{pmatrix} = M_{x/y} * s_i = \begin{pmatrix} a_{11} & a_{12} & a_{13} & a_{14} & a_{15} & a_{16} \\ a_{21} & a_{22} & a_{23} & a_{24} & a_{25} & a_{26} \\ a_{31} & a_{32} & a_{33} & a_{34} & a_{35} & a_{36} \end{pmatrix} \begin{pmatrix} X_{1i,LC} \\ X_{2i,LC} \\ Y_{i,LC} \\ Z_{i,LC} \\ K_{i,LC} \\ L_{i,LC} \end{pmatrix}$$

The chromaticity values, are given as a function of the values of those primaries by the following expressions:

$$x_{cam\,i} = \frac{X_i}{X_i + Y_i + Z_i} \quad y_{cam\,i} = \frac{X_i}{X_i + Y_i + Z_i} \quad z_{cam\,i} = \frac{Z_i}{X_i + Y_i + Z_i},$$

wherein $x_{cam\,i} + y_{cam\,i} + z_{cam\,i} = 1$. As the chromaticity value $z_{cam\,i}$ is dependent on the other two chromaticity values, only $x_{cam\,i}$ and $y_{cam\,i}$ are considered in this example.

The chromaticity distance $D_{i,\,chrom}$ between the chromaticity $x_{cam,\,i}$, $y_{cam\,i}$, produced by the transformation of the six exemplary sensings $s_i$, for a calibration-illuminant i and the known chromaticity of the calibration illuminant i $x_{ref\,i}$, $y_{ref\,i}$ is given by the distance between a vector comprising $x_{cam,\,i}$, $y_{cam\,i}$, and a vector comprising $x_{ref\,i}$, $y_{ref\,i}$.

$$D_{i,chrom} = \left\| \begin{pmatrix} x_{ref\,i} \\ y_{ref\,i} \end{pmatrix} - \begin{pmatrix} x_{cam\,i} \\ y_{cam\,i} \end{pmatrix} \right\|$$

This chromaticity distance $D_{i,\,chrom}$ is defined by, e.g. an $L_1$ or an $L_2$ norm.

After determining the chromaticity-distances $D_{i,\,chrom}$, the chromaticity-optimized set of calibration factors is, as mentioned above, for example, determined by choosing the set of calibration factors that minimizes the norm of chromaticity distances for all the corresponding calibration-illuminants. The specific example of minimizing a root-mean-square as an example of a norm of chromaticity-distances when choosing the set of calibration factors is further explained below.

In a third activity, a second set of calibration-factors , herein further referred to as a set of calibration factors optimized with respect to the achromatic primary - that yields an optimized intensity value of the achromatic primary, when applied to the signals measured by the sensings, is determined. The terms "optimized with respect to the achromatic primary" and "optimized intensity value of the achromatic primary" are also used in this document to make clear that the set of calibration factors resulting from the method yields, when applied to the signals measured by the sensings, values of the primaries of the human-standard-observer based space with an achromatic primary that has a minimal norm of the achromatic distances for all the calibration illuminants, which is further explained below.

The set of calibration matrix factors optimized with respect to the achromatic primary is determined by minimizing the norm of achromatic distances. The achromatic distances are defined as the distances between (i) the values of the achromatic primary retrieved by applying the set of calibration factors to the signals measured by the n sensings, and (ii) known values of the achromatic primary for all calibration illuminants. To provide a particular example, also the norm of the achromatic-distances is a mathematical norm, such as a root-mean-square of these achromatic-distances obtained for the calibration illuminants. The norm of the achromatic-distances can be seen as absolute value of the measurement error of the colorimeter too.

Thus, determining this achromatic-optimized set of calibration-factors comprises, for example, choosing the set of calibration-factors that minimizes the norm of said achromatic distances, as described above and hereinafter.

By choosing this set of calibration factors the measurement error of a colorimeter equipped with those calibration factors optimized with respect to the achromatic primary, is reduced, as already described in conjunction with the determination of the set of chromaticity-optimized calibration factors. The set of calibration factors (being a function of the set of calibration factors to be chosen) is also, for example, chosen such that the norm of the achromatic-distances is minimized. The specific example of minimizing a root-mean-square as an example of a norm of these achromatic-distances obtained for a plurality of calibration illuminants, is further explained below.

Choosing this set of calibration factors, for example, achieved by iterative numerical methods, such as non-linear optimization algorithms. These methods vary a set of variable calibration-factors until the norm of the chromaticity-distances or the norm of the achromatic distances is minimized.

Alternatively, this set of calibration factors that minimizes the norm of the achromatic distances is chosen, for example, by using analytical mathematical methods, analogous as described in conjunction with choosing the set of calibration factors that minimizes the norm of the chromaticity-distances.

An example of determining an achromatic-distance is described in the following: The six signals measured by the sensings $s_i$, that were already introduced in the above example, are transformed into the achromatic primary $Y_{0i}$ by a set of calibration factors represented by the matrix $M_Y$, as follows:

$$\begin{pmatrix} X_{0i} \\ Y_{0i} \\ Z_{0i} \end{pmatrix} = M_Y * s_i = \begin{pmatrix} b_{11} & b_{12} & b_{13} & b_{14} & b_{15} & b_{16} \\ b_{21} & b_{22} & b_{23} & b_{24} & b_{25} & b_{26} \\ b_{31} & b_{32} & b_{33} & b_{34} & b_{35} & b_{36} \end{pmatrix} \begin{pmatrix} X_{1i,LC} \\ X_{2i,LC} \\ Y_{i,LC} \\ Z_{i,LC} \\ K_{i,LC} \\ L_{i,LC} \end{pmatrix}$$

$M_Y$ is a 3 x 6 - matrix with entries (calibration-factors) $b_{11}$ to $b_{36}$:

$$M_Y = \begin{pmatrix} b_{11} & b_{12} & b_{13} & b_{14} & b_{15} & b_{16} \\ b_{21} & b_{22} & b_{23} & b_{24} & b_{25} & b_{26} \\ b_{31} & b_{32} & b_{33} & b_{34} & b_{35} & b_{36} \end{pmatrix}$$

$X_{0i}$ and Zoi are redundant in this example, therefore the transformation could also be achieved by a 1 x 6 Matrix with calibration factors $b_{11}$ to $b_{16}$, as shown by the formula reproduced below:

$$Y_{0i} = M_Y * s_i = (b_{11} \quad b_{12} \quad b_{13} \quad b_{14} \quad b_{15} \quad b_{16}) \begin{pmatrix} X_{1i,LC} \\ X_{2i,LC} \\ Y_{i,LC} \\ Z_{i,LC} \\ K_{i,LC} \\ L_{i,LC} \end{pmatrix}$$

The achromatic distance $D_{i,\,achrom}$, i.e. the distance between $Y_{0i}$ and the known achromatic primary of calibration illuminant i, namely $Y_{ref\,i}$, is given by:

$$D_{i,achrom} = \left\| Y_{ref\,i} - Y_{0i} \right\|$$

This difference $D_{i,\,achrom}$ is defined by, e.g. a $L_1$ or a $L_2$ norm.

After determining the achromatic-distances $D_{i,\,achrom}$, the set of calibration factors optimized with respect to the achromatic primary is, as mentioned above, for example, determined by choosing the set of calibration factors that minimizes the norm of the achromatic-distances for corresponding calibration-illuminants.

The activity of choosing the set of calibration factors that minimizes the norm of the achromatic distances and the activity of choosing the set of calibration factors that minimizes the norm of the chromaticity-distances are carried out independently from each other.

The resulting chromaticity-optimized set of calibration factors corresponds to the set of calibration factors that minimizes the norm of the chromaticity-distances of all calibration illuminants, whereas the resulting set of chromaticity factors optimized with respect to the achromatic primary corresponds to the set of calibration factors that minimizes the norm of the achromatic distances of all calibration illuminants.

One consequence of separating these two choosing activities is that the intensity value of the achromatic primary that is obtainable by applying the chromaticity-optimized set of calibration factors to signals measured by the n sensings, is different to the intensity value of the achromatic primary that is obtainable by applying the set of calibration factors optimized with respect to the achromatic primary to those signals. The former is part of a set of values of primaries that have optimized chromaticity values, the latter is the optimized intensity value itself.

Carrying out the choosing activities simultaneously would lead neither to the chromaticity-optimized set of calibration factors nor lead to the set of calibration factors optimized with respect to the achromatic primary. The achromatic primary (once expressed as a function of the set of the set calibration factors that is chosen to minimize the norm of the chromaticity-distances and once expressed as a function of the set of calibration factors that is chosen to minimize the norm of the achromatic distances) would simultaneously be part of the first choosing activity and also the second choosing activity. As a result a compromise between those contradictory criterions that should be fulfilled by the first and second choosing activity would be found for the parts of the sets of calibration factors that influence the achromatic primary. Hence neither of the two sets of calibration factors would be optimal.

Both sets of calibration factors together enable the colorimeter, when measuring light after the calibration, to provide optimized readings both in chromaticity and for the achromatic primary.

The term "readings" referrers to final measurement values of light with respect to the three primaries.

The two sets of calibration factors obtained by the method are (i) a chromaticity-optimized set of calibration factors and (ii) a set of calibration factors optimized with respect to the achromatic primary. The colorimeter is arranged to measure light after the calibration. Also a camera using the functional elements of the colorimeter, such as a photodiode array equipped with different filters to obtain the n sensings as described above is to be understood as a colorimeter in the above sense.

The colorimeter provides optimized readings both in chromaticity and for the achromatic primary due to the two sets of calibration factors. The chromaticity-optimized set of calibration factors enables the colorimeter to provide optimized readings of the chromaticity values xy in the xyY human-observer based color space.

In the above example, the chromaticity optimized calibration factors with optimized x/y-chromaticity values when applied to the signals measured by the sensings $s_i$. The optimized chromaticity readings x/y can be obtained from these tristimulus values as they are a function of the tristimulus values obtained by applying the set of calibration factors:

$$x = \frac{X}{X+Y+Z} \quad y = \frac{Y}{X+Y+Z}$$

.

The set of calibration factors optimized with respect to the achromatic primary enables the colorimeter, in turn, for example, to provide optimized readings of the values of the achromatic primary Y in the xyY color space, or L* in the CIELAB or CIELUV color space.

Comments on the veneration of the n times m sensings by illumination with calibration illuminants

In the above mentioned first activity, m sets of n sensings for the m calibration illuminants with known values of the three primaries are generated.

In some embodiments, the colorimeter is illuminated separately with real calibration illuminants having different spectra (contrary to simulated calibration illuminants mentioned above). Such real calibration illuminants with different spectra are, for example, light emitting diodes (LED), tungsten lamps, halogen lamps, fluorescence light source or the like. However the term "calibration illuminant" relates to source of light with different spectra in general. Therefore also a single light source, driven to emit light of different spectra by adjusting, for example its temperature or the chemical composition of the light emitting components of the illuminant (for example by heating up different chemical elements emitting light of different spectra when heated) is covered by the term "calibration illuminant". If different groups of light sources emit light simultaneously this is too seen as a "calibration illuminant". The colorimeter is then separately illuminated by different groups of light sources, each different group corresponding to a calibration illuminant.

Comment on the generation of the m sets of n sensings by computation

In some embodiments, the m sets of n sensings are generated by measuring the spectral sensitivity of the n sensors and the spectral emission of the calibration illuminants. The n sensings are computed thereof. The n sensings are, for example, computed by applying a computer model of a sensor arrangement using the measured spectral sensitivity of the n sensors and the measured spectral emission of the calibration illuminants.

Comments on known values of primaries of the calibration illuminants obtained by reference spectrometer

The known values of the three primaries of the human-standard-observer-based color space of the calibration illuminants are measured or predetermined, as already mentioned above. The values of the corresponding achromatic primary and/or the chromaticity values of those primaries are, for example, measured by illuminating the colorimeter and a very precise reference-spectrometer, such as a high quality spectrometer using color-matching-functions to obtain the values of the primaries and at the same time measuring the same calibration-illuminants.

Therefore, the colorimeter and the reference-spectrometer are illuminated by the same calibration illuminants, and the known value of the primaries of these calibration illuminants is obtained by measuring the light of the respective calibration illuminant with said reference-spectrometer.

Comments on the measuring light after the calibration- producing XYZ readings

As already mentioned above, when measuring light with the colorimeter, the chromaticity-optimized set of calibration-factors is applied to signals provided by the sensor arrangement originating from the light to obtain chromaticity-optimized values of the primaries. The set of calibration-factors optimized with respect to the achromatic primary is also applied to these signals to obtain the optimized value of the achromatic primary.

This is, for example, carried out by multiplying the matrix $M_{x/y}$ of the above example, representing the chromaticity-optimized set of calibration-factors with a vector of the signals measured by the sensings s and by multiplying the matrix $M_Y$ of the above example, representing the set of calibration factors optimized with respect to the achromatic primary, with the same vector s:

$$\begin{pmatrix} X' \\ Y' \\ Z' \end{pmatrix} = M_{x/y} * s = \begin{pmatrix} a_{11} & a_{12} & a_{13} & a_{14} & a_{15} & a_{16} \\ a_{21} & a_{22} & a_{23} & a_{24} & a_{25} & a_{26} \\ a_{31} & a_{32} & a_{33} & a_{34} & a_{35} & a_{36} \end{pmatrix} \begin{pmatrix} X_{1,LC} \\ X_{2,LC} \\ Y_{,LC} \\ Z_{,LC} \\ K_{,LC} \\ L_{,LC} \end{pmatrix}$$

$$Y_0 = M_Y * s = \begin{pmatrix} b_{11} & b_{12} & b_{13} & b_{14} & b_{15} & b_{16} \end{pmatrix} \begin{pmatrix} X_{1,LC} \\ X_{2,LC} \\ Y_{,LC} \\ Z_{,LC} \\ K_{,LC} \\ L_{,LC} \end{pmatrix}$$

By applying the chromaticity-optimized set of calibration factors $M_{x/y}$ to the signals measured by the sensings, values of primaries with optimized readings in chromaticity x/y are obtained, whereas by applying the set of calibration factors optimized with respect to the achromatic primary $M_Y$, optimized readings with respect to the achromatic primary Y are obtained. In the case that optimized readings in the xyY color space should be obtained and x/y readings were derived from the optimized (X', Y', Z') readings, these x/y readings in combination with the X reading would already be the desired readings in the xyY color space.

In the case that, for example, tristimulus values (X, Y, Z) with optimized chromaticity values x/y and also an optimized achromatic primary Y are the desired readings, the two readings and the corresponding calibration factors are, for example, used in the following way to provide these X, Y, Z, readings optimized both in chromaticity and for the achromatic primary:

The optimized readings in chromaticity x/y are scaled with a factor including the optimized intensity value of the achromatic primary $Y_0$ and the intensity value of the achromatic primary of the chromaticity-optimized primaries Y'.

By performing this scaling, the chromaticity values of the chromaticity-optimized values of the primaries remain unchanged, thereby the chromaticity values of the chromaticity-optimized values of the primaries still have a minimal chromaticity-distance to the known chromaticity values of the calibration illuminants. Hence, e.g. tristimulus chromaticity values remain optimal, regardless of the scaling. This is explained by the fact that every factor multiplied with a chromaticity, e.g. the factor three as shown below, which is equally applied to all three values of primaries, cancels out and has therefore no influence on chromaticity. This can be demonstrated by the example of tristimulus primaries X, Y, Z and their respective chromaticity values x, y:

$$x = \frac{3X}{3X + 3Y + 3Z} \quad y = \frac{3X}{3X + 3X + 3Z}$$

This scaling-factor is, for example, a function of those two primary values f($Y_0$, Y') (the reading of the achromatic primary of the chromaticity-optimized readings of the primaries and the optimized reading of the achromatic primary). Such an exemplary scaling operation is mathematically expressed by:

$$\begin{pmatrix} X_{final} \\ Y_{final} \\ Z_{final} \end{pmatrix} = f(Y_0, Y') \begin{pmatrix} X' \\ Y' \\ Z' \end{pmatrix}$$

In this expression, the vector representing the chromaticity-optimized readings of the primaries X' Y', Z', is multiplied with the factor $f(Y_0, Y')$ to obtain the final readings of the primaries produced by the colorimeter, namely $X_{final}$, $Y_{final}$, $Z_{final}$.

The factor $f(Y_0, Y')$ is given, for example, by the ratio between the achromatic primary Y' of the chromaticity-optimized reading of the primaries (X', Y', Z') and the optimized reading of the achromatic primary $Y_0$, e.g. $Y_0$ divided by Y', such that the final readings of the primaries are then given by:

$$\begin{pmatrix} X_{final} \\ Y_{final} \\ Z_{final} \end{pmatrix} = \frac{Y_0}{Y'} \begin{pmatrix} X' \\ Y' \\ Z' \end{pmatrix}$$

By carrying out the scaling using this exemplary ratio, the chromaticity-optimized achromatic primary Y' is transformed into the optimized achromatic primary $Y_0$, wherein the chromaticity values of the chromaticity optimized primaries X', Y', Z' remain unchanged.

The result of this scaling are the final readings of the primaries X, Y, Z (tristimulus values), optimized both in chromaticity and for the achromatic primary Y.

If only the chromaticity-optimized set of calibration factors were applied, the reading of the achromatic primary Y was, as a consequence, non-optimal, as the chromaticity-optimized set of calibration factors also shifts that achromatic primary.

Comments on chromaticity-distances and/or achromatic distances

In some embodiments the chromaticity distances and/or the achromatic distances are Euclidian distances. Generically expressed, the chromaticity difference $D_{i,chrom}$ taken from the example described above is given by:

$$D_{i,chrom} = \left\| \begin{pmatrix} x_{ref\,i} \\ y_{ref\,i} \end{pmatrix} - \begin{pmatrix} x_{cam\,i} \\ y_{cam\,i} \end{pmatrix} \right\|$$

This chromaticity distance is in this embodiment a Euclidian distance, given by the formula:

$$D_{i,chrom} = \sqrt{(x_{ref\,i} - x_{cam\,i})^2 + (y_{ref\,i} - y_{cam\,i})^2}$$

Generally expressed, the achromatic difference $D_{i,achrom}$ taken from the example described above is given by:

$$D_{i,achrom} = \left\| Y_{ref\,i} - Y_{0i} \right\|$$

This chromaticity distance is in this embodiment a Euclidian distance, given by the formula:

$$D_{i,achrom} = \sqrt{(Y_{ref\,i} - Y_{0i})^2}$$

By using a Euclidian distance as the chromaticity distance and/or the achromatic distance, those distances correspond to distances in a Euclidian space. The Euclidian distance is positive definite, i.e. it results only in positive values for the distances $D_{i,achrom}$ and $D_{i,chrom}$. Therefore, when these distances are minimized using a root-mean-square as the norm of the achromatic distances or chromaticity-distances, the root-mean-square can only be minimized by minimizing the chromaticity-distances or achromatic distances. This is the case here, as all summands are always positive and cannot cancel each other out.

Comments on obtaining chromaticity-distances and achromatic distances by minimizing a root-mean-square

In some embodiments, the norm of the chromaticity-distances is a root-mean-square of the chromatic distances, obtained for the m calibration illuminants, and/or the norm of the achromatic distances is a root-mean-square, of the achromatic distances, obtained for the m calibration illuminants.
Hence, the norm of chromaticity distances in this example given by a root-mean-square $F_{chrom}$ of the chromaticity differences $D_{i\,chrom}$, which reads:

$$F_{chrom} = \sqrt{\frac{1}{m} \sum_{i=1}^{m} D_{i,chrom}^2}$$

wherein m is the number of calibration-illuminants for which a chromaticity-difference $D_{i\,chrom}$ is determined.
The norm of the chromaticity-distances is minimized as follows:

$$F_{chrom} = \sqrt{\frac{1}{m} \sum_{i=1}^{m} D_{i,chrom}^2} \rightarrow min.$$

The minimization is, for example, carried out by means of an iterative numerical method mentioned above. Such iterative numerical methods comprise varying a set of variable calibration factors in an iterative manner to until a minimal value of the root-mean-square is found. Examples for applicable numerical methods are the Nelder-Mead algorithm or other nonlinear programming algorithms, such as the Powell-algorithm.
As start values for the variation of the variable calibration factors, for example, previously stored calibration factors can be used.
Alternatively, as an analytical solution for the set of calibration factors can be determined in the case that the number of measured sensing n is equal to the number of calibration illuminants m, the set of calibration factors which is the solution of that problem for chosen calibration can serve as start values for the variation. Advantageously, n calibration illuminants are chosen that cover a broad part of the spectrum, when determining these start values.
The chromaticity values of the primaries obtained by applying the chromaticity-optimized calibration factors to the signals measured by the sensings have a lower residual deviation from the known chromaticity values of the calibration-illuminants than chromaticity values of primaries that were determined by minimizing the differences between (i) just the primaries ($X_{cam\,i}$, $Y_{cam\,i}$, $Z_{cam\,i}$) - not the chromaticity of the primaries - obtained by applying the calibration factors and (ii) the known primaries of the calibration illuminants ($X_{ref\,i}$, $Y_{ref\,i}$, $Z_{ref\,i}$).
Such a difference is given for a calibration-illuminant i:

$$D_{i,color} = \sqrt{(X_{ref\,i} - X_{cam\,i})^2 + (Y_{ref\,i} - Y_{cam\,i})^2 + (Z_{ref\,i} - Z_{cam\,i})^2}$$

And therefore the root-mean-square $F_{color}$ of those differences is given by:

$$F_{color} = \sqrt{\frac{1}{m} \sum_{i=1}^{m} D_{i,color}^{2}}$$

If the chromaticity-optimized set of calibration factors were determined by minimizing this root-mean-square $F_{color}$, the chromaticity values of readings for primaries resulting from applying this set to the signals measured by the sensings are, in general, non optimal.

Alternatively or additionally, the norm of the achromatic distances is a root-mean square of the achromatic distances obtained for the m calibration illuminants (m is a number greater than n).

This root-mean-square $F_{achrom}$ of the achromatic differences $D_{i\,achrom}$, is given by:

$$F_{achrom} = \sqrt{\frac{1}{m} \sum_{i=1}^{m} D_{i,achrom}^{2}}$$

wherein m is the number of calibration-illuminants for which a chromaticity-difference $D_{i\,achrom}$ is determined.

Hence the criterion for finding the set of calibration factors optimized with respect to the achromatic primary by minimizing the norm given above, reads:

$$F_{achrom} = \sqrt{\frac{1}{m} \sum_{i=1}^{m} D_{i,achrom}^{2}} \to min.$$

The minimization is, for example, carried out by means of an iterative numerical method, as mentioned above.

Comments on "limit and penalty"

In some embodiments, the summands of the root-mean-square of the chromaticity distances have either uniform weights or, alternatively, non-uniform weights, i.e. at least one of the summands is weighted with a higher or lower weight than another summand.

An exemplary root-mean-square of chromaticity distances, including weights for each summand, is given below:

$$F_{chrom} = \sqrt{\frac{1}{m} \sum_{i=1}^{m} w_i D_{i,chrom}^{2}}$$

wherein $w_i$, is the weight for calibration illuminant i and $D_{i,\,chrom}$ is the chromaticity distance for that calibration illuminant.

If the weights are non-uniform, the higher the weighting factor is, the higher the chromaticity distance for a certain calibration-illuminant, the more this chromaticity distances is prioritized by the iterative numerical method or variation method. Hence, the chromaticity distance for a certain calibration-illuminant, or the calibration distances for a certain group of calibration-illuminants will be, for example, minimized at the expense, of chromaticity distances for other calibration illuminants.

Alternatively or additionally, in some embodiments the summands of the root-mean square of the achromatic distances have either uniform weights or, alternatively, non-uniform weights, i.e. at least one of the summands is weighted with a higher or lower weight than that of other summand.

An exemplary root-mean-square of achromatic distances with weighted summands is given below:

$$F_{achrom} = \sqrt{\frac{1}{m} \sum_{i=1}^{m} w_i D_{i,achrom}^2}$$

wherein $w_i$ is the weighting factor for calibration illuminant i and $D_{i,\,achrom}$ is the achromatic distance for that calibration illuminant.

The considerations made above for the root-mean-square of chromaticity-distances in conjunction with the behavior of the iterative numerical method or variation method in response to summands with uniform weights or non-uniform weights also hold true for the root-mean-square of achromatic distances.

In some embodiments, in response to at least one chromaticity distance and/or at least one achromatic distance exceeding a given penalty-distance from a target value when varying the set of variable calibration factors, the at least one exceeding chromaticity distance and/or exceeding achromatic distance is weighted higher in the subsequent variation of the set of variable calibration factors than in the preceding variation of the sets of variable calibration factors, wherein the exceeding chromaticity distance and/or exceeding achromatic distance is weighted higher than the chromaticity distances and/or achromatic distances that do not exceed this penalty distance.

The penalty distance is a given distance from the target value. The target value can either be arbitrarily chosen (predetermined) or may be a momentary value of a corresponding norm of the chromaticity distances or achromatic distances, such as a root-mean-square of chromaticity-distances or a root-mean-square of achromatic distances.

This "limit and penalty" mechanism is, for example, applied, after several "warm up runs" of an iterative minimization method, as penalizing a lot of chromaticity-distances/achromatic distances at this early stage might lead to numerical unstable behavior of standard nonlinear programming algorithms.

By increasing the weight of an exceeding chromaticity-distance/achromatic distance in a norm of achromatic or chromatic distances, e.g. the root-mean-square of these distances, the exceeding chromaticity-distance/achromatic distance is minimized at the expense of the other chromaticity-distance/achromatic distance to be minimized.

However, the overall result for the chromaticity-distances / achromatic distances is more uniform, i.e. confined within a range around the target value defined by the penalty distance, when this functionality is applied.

<u>Comments on n sensings obtained simultaneously</u>

In some embodiments, the sensor arrangement comprises n filter-photo sensors comprising n filters with different spectral sensitivities coupled to corresponding n photo sensors, to provide the n sensings simultaneously.

The filter photo sensors comprise photo sensors that convert light into electric signals, such as photodiodes, charge-coupled devices (CCD) or complementary metal-oxide-semiconductor (CMOS) photo-sensors and corresponding filters. The filters are, for example, chromatic filters, such as $X_1$, $X_2$, Y or Z filters. In this embodiment at least four filters are used to obtain at least four sensings.

These n filters are, for example placed on the corresponding photosensor so that they face the light measured, i.e. in the beam path of the light. For example, an array of photo sensors having six sub-arrays with separate beam paths leading to them, is provided. In this exemplary sensor arrangement, a different filter is provided in the beam path of each subarray.

The filters have different spectral sensitivities. Additionally to the effects already mentioned, for example, a first set of filters can be used that provides an accurate filter function in a certain spectral region but a rather inaccurate in other spectral regions. This first set of filters is for example supported by a second set of filters that provides an accurate filter function right in that spectral region where the first set of filters is inaccurate and vice versa.

The at least four sensings and therefore the corresponding at least four signals measured by the sensings are obtained simultaneously, as the same light is measured by the sensor arrangement equipped with n different filters facing n photosensors such as CCD elements, CMOS elements or photodiodes.

Comments on the sequential obtainment of the n sensings

In some embodiments, the sensor arrangement comprises n movable filters with different spectral sensitivities and a photo sensor, wherein the filters are sequentially moved into a filtering position, to provide the n sensings sequentially.

The sensor arrangement is, for example, equipped with one photo sensor such as a CMOS sensor, and a filter arrangement moveable into the beam path to the photo sensor. The filter arrangement has, e.g. ten filters, which are moved into a filtering position, e.g. into a beam path leading to the photo sensor. Therefore ten measurement cycles in which different filters are moved into the filtering position have to be carried out to obtain the ten sensings.

Monochromatic camera

In some embodiments the photo sensor of a monochromatic camera that is arranged to measure a spatially extended light distribution, is used as the photo sensor. The monochromatic camera is capable of measuring light of, e.g. millions of pixels simultaneously. The photo sensor used comprises, for example, CCD or CMOS sensors.

Using CCD or CMOS sensors as photo sensors is advantageous as they are less prone to noise such as dark currents than, for example, photo diode arrays.

The n sensings are obtained for example by moving n filters sequentially into a filtering position and measuring the sensings for each of the millions of pixels. According to the method described herein, a set of chromaticity optimized calibration factors and a set of calibration factors optimized with respect to the achromatic primary can be determined for a certain spot, e.g. a pixel in the center of the light distribution measured by the camera and the respective filters.

Using the chromaticity-optimized calibration-factors and the calibration factors optimized with respect to the achromatic primary obtained for this certain spot, and values of XYZ primaries are the desired readings produced by the colorimeter for each pixel of the spatial light distribution can be obtained by scaling the chromaticity-optimized set of primaries with the factor including the optimized achromatic primary and the achromatic primary of the chromaticity optimized primaries. Hence, the calibration factors obtained for a certain spot of the light distribution, e.g. a certain pixel at the center of the light distribution, are applied to obtain the XYZ primaries of each pixel of the measured spatially extended light distribution.

Alternatively, both sets of calibration factors are obtained for each pixel of the measured extended light distribution and then used to obtain the primaries produced by the colorimeter for each pixel of the spatially extended light distribution.

Comments on narrow-band light sources as calibration illuminants

In some embodiments at least one of the calibration illuminants has a wavelength distribution with a full-width-half-maximum in a range from 10 nm to 50 nm.

Examples for such calibration illuminants are light emitting diodes (LEDs). Using calibration illuminants with a full width half maximum in this range allows to measure a plurality of calibration illuminants with contiguous full-width-half-maxima, wherein all the peaks of the wavelength distributions lie within the range of visible light, i.e. 360-830 nm. Visible light is the light perceived by a human standard observer and therefore especially suitable to calibrate the colorimeter that produces values of primaries of the human standard observer based color space. Additional to those rather narrowband light sources also broadband light sources, such as tungsten lamps, can be used as calibration illuminants.

In some embodiments the majority or even all of the calibration illuminants have a wavelength distribution with a full-width-half-maximum in a range from 10nm to 50nm. Common tristimulus filter often produce non-accurate filter signals when measuring light with such a (rather narrowband) wavelength distribution. When such common tristimulus filters are implemented in the sensor arrangement of the colorimeter to be calibrated, using such light sources as calibration illuminants is advantageous, as the sets of calibration factors are chosen by the calibration method described herein such that the non-accurate filter signals of the common tristimulus filter, are compensated by applying the chromaticity-optimized set of calibration factors and/or the set of calibration factors optimized with respect to the achromatic primary to the sensing signals obtained by the sensor arrangement that comprises that tristimulus filter.

Comment on the application of method to different human-standard observer based color spaces

In some embodiments the optimized readings in chromaticity and for the achromatic primary are obtained for the color spaces xyY, CIELAB or CIELUV.

The chromaticity-optimized set of calibration factors as well as the set of calibration-factors optimized with respect to the achromatic primary are determined to enable the colorimeter to produce optimized readings in chromaticity and for the achromatic primary of the primaries of a human-standard-observer based color space. In the above examples, the determination of such calibration-factors for the color space xyY was described in detail. The values for (i) xy and for (ii) Y were obtained by (i) applying the chromaticity-optimized set of calibration factors to the signals measured by the sensings and determining the optimized chromaticity readings as a function of the resulting tristimulus primaries, and (ii) applying the set of calibration factors optimized with respect to the achromatic primary to the signals measured by the sensings and using the obtained achromatic primary as the optimized reading for the achromatic primary.

Furthermore it was described how tristimulus primaries having optimal readings in chromaticity and optimal readings for the achromatic primary could be obtained by applying the sets of calibration factors to the signals measured by the sensings in a combined manner, i.e. the scaling operation beforehand described.

However, in embodiments in which the calibration factors enable the colorimeter to produce optimized readings of the CIELAB primaries L*a*b* or the CIELUV primaries L*u*v*, the chromaticity-distances are obtained for the chromaticity values related to these primaries and the achromatic distances are obtained for the achromatic primaries of those color spaces.

When the method of calibrating a colorimeter is applied to obtain such optimized readings for the CIELAB or CIELUV primaries, the signals measured by the sensings have to be normalized relative to the light of a reference white point, e.g. Xn, Yn, Zn, used in the conversion from readings in the XYZ color space to the L*a*b* color space or L*u*v* color space.

The chromaticity-distances are, for example, determined using chromaticity values that are related to values of primaries of the $L^* u^* v^*$ color space. The transformation to $X_i$, $Y_i$, $Z_i$, by the L*u*v* - chromaticity-optimized set of calibration factors $M_{u'/v'}$ is, for example, in this case given by:

$$\begin{pmatrix} X_i \\ Y_i \\ Z_i \end{pmatrix} = M_{u'/v'} * s_i = \begin{pmatrix} g_{11} & g_{12} & g_{13} & g_{14} & g_{15} & g_{16} \\ g_{21} & g_{22} & g_{23} & g_{24} & g_{25} & g_{26} \\ g_{31} & g_{32} & g_{33} & g_{34} & g_{35} & g_{36} \end{pmatrix} \begin{pmatrix} X_{1i,LC} \\ X_{2i,LC} \\ Y_{i,LC} \\ Z_{i,LC} \\ K_{i,LC} \\ L_{i,LC} \end{pmatrix}$$

The mathematical transformation from $X_i$, $Y_i$, $Z_i$ related chromaticity values $x_{cam\,i}$, $y_{cam\,i}$ to the L*, u*, v* related chromaticity values $u'_{cam\,i}$, $v'_{cam\,i}$ and from $X_i$, $Y_i$, $Z_i$ to $u'_{cam\,i}$, $v'_{cam\,i}$ is given by:

$$v'_{cam\,i} = \frac{9Y_i}{X_i + 15Y_i + 3Z_i} = \frac{9y_{cam\,i}}{-2x_{cam\,i} + 12y_{cam\,i} + 3}$$

$$u'_{cam\,i} = \frac{4X_i}{X_i + 15Y_i + 3Z_i} = \frac{4x_{cam\,i}}{-2x_{cam\,i} + 12y_{cam\,i} + 3}$$

A chromaticity distance for a respective illuminant i with L*, u*, v* related chromaticity values $u'_{ref\,i}$ and $v'_{ref\,i}$ is given by:

$$D_{i,chrom-u'/v'} = \left\| \begin{pmatrix} u'_{ref\,i} \\ v'_{ref\,i} \end{pmatrix} - \begin{pmatrix} u'_{cam\,i} \\ v'_{cam\,i} \end{pmatrix} \right\|$$

By applying chromaticity-optimized calibration factors, obtained by, e.g. by minimizing a root-mean-square of those chromaticity-distances, to the signals measured by the sensings, chromaticity-optimized tristimulus primaries X', Y', Z', are obtained. Chromaticity-optimized means in this context, that the root-mean square of the chromaticity-distances of the CIELUV chromaticity values u', v' of those tristimulus primaries X', Y', Z' are minimal but the root-mean square of the chromaticity-distances of the tristimulus chromaticity-values x, y of those primaries are probably not minimal.

To obtain the set of calibration factors optimized with respect to the achromatic primary L*, of the L*u*v* color space, $Y_{0i}$ is, for example, expressed as a function of $L^*_{0i}$ (the achromatic primary of the CIELUV space), by applying the respective mathematical transformations, and the achromatic differences:

$$D_{i,achrom\,L^*} = \left\| L^*_{ref\,i} - L^*_{0i} \right\|$$

The norm of these achromatic differences, e.g. a root-mean-square of these distances, is minimized to determine the set of calibration factors optimized with respect to the achromatic primary.

After determining the two sets of calibration factors, optimized readings for chromaticity and the achromatic primary of the color space L*u*v* can be obtained when measuring light after the calibration by applying the respective sets of calibration factors to the signals measured by the sensings and - thereby obtaining tristimulus values optimized with respect to the chromaticity values u*v* and tristimulus values optimized with respect to the achromatic primary L*. By converting these tristimulus values into L*, u*, v* readings, L*u*v*readings, wherein the chromaticity values u*v* as well as the achromatic primary value L* is optimal, are obtained.

If tristimulus values corresponding to optimal values for both L* and u*v* should be obtained, the sets of calibration factors can be used in a combined manner, for example by scaling the achromatic primary of the chromaticity optimized tristimulus values with a factor containing the optimized achromatic primary Y, as described above.

The activities described above in conjunction with the primaries L*, u*, v* of the CIELUV color space are also applicable for determining the sets of calibration factors for the primaries L*, a*, b*, in an analogous manner. The activities are the same, but the mathematical transformations from the primaries L*, a*, b* to their chromaticity values a, b are different.

Comment on the colorimeter equipped with the sets of calibration factors

According to a second aspect, a colorimeter for measuring values of light with regard to primaries of a human-standard-observer-based color space is provided. The colorimeter is equipped the sets of calibration factors obtainable by the method for calibrating a colorimeter as described above. This means that calibration factors that are obtained by a mathematically equivalent method to the method described herein, shall be covered by the subject-matter for which protection is sought. To provide an example, the result obtainable by the method of dividing 1 by 2 is 0.5, the mathematical equivalent method of dividing 2 by 4 yields the same result. Sets of calibration factors are, for example, stored in a physical memory of the colorimeter, e.g. a flash memory of the colorimeter, replacing old calibration factors.

The colorimeter comprises, for example, a sensor arrangement providing n sensings of the light with different spectral sensitivities, n being a number greater or equal four.

The sensor arrangement comprises, for example, a combination of n photo sensors and n filters with different spectral sensitivities is provided that is arranged to measure the light with n sensings simultaneously. These filter photo sensors include, for example, photo sensors that convert light into electric signals, such as photo diodes, charge-coupled devices (CCD) or complementary metal-oxide-semiconductor (CMOS) sensors and filters. The filters are placed, for example, on the photo sensors so that they face the light measured, i.e. they are placed in the beam path of the light. For example arrays of such CMOS or CCD sensors wherein each CMOS or CCD sensor is coupled to a corresponding filter, are provided as the sensor arrangement.

In other examples, the light sensor arrangement comprises a filter arrangement, moveable into the beam path of one or more light sensors, wherein the number of light sensors equipped to measure the light passing through a filter is smaller than the number of filters of the filter arrangement. The filter arrangement has, for example ten filters, which are moved into a filtering position, e.g. into the beam path leading to a CCD sensor. If such an exemplary sensor arrangement is provided, ten measurement cycles in which different filters are moved into the filtering position are necessary to obtain the ten sensings.

The colorimeter further comprises a processing system that is arranged to determine the values of the light with respect to the three primaries of the human-standard-observer based color space from the n sensings. The processing system is therefore arranged to map signals measured by the at least four sensings to tristimulus values, such as the chromaticity-optimized set of calibration factors and the set of calibration factors optimized with respect to the achromatic primary.

The processing system itself comprises, for example, a central processing unit (CPU), being connected to at least one interface providing the signals measured by the sensings and a central memory connected to said CPU in which the calibration factors are stored. The CPU is programmed to carry out the method further described below. Alternatively, the processing unit is replaced by a plurality of integrated circuit, such as an array of adder and multiplier circuits that are capable of carrying out a matrix multiplication, and other integrated circuits, such as dividers.

The processing system is arranged to determine the values of the light with respect to the three primaries of the human-standard-observer based color space by:

(i) Applying the chromaticity-optimized set of calibration factors to signals provided by the sensor arrangement originating from the light to obtain chromaticity-optimized values of the primaries.
This activity (i) is carried out, for example, by multiplying the matrix $M_{x/y}$, representing the chromaticity-optimized set of calibration-factors with a vector of the signals measured by the sensings s:

$$\begin{pmatrix} X' \\ Y' \\ Z' \end{pmatrix} = M_{x/y} * s = \begin{pmatrix} a_{11} & a_{12} & a_{13} & a_{14} & a_{15} & a_{16} \\ a_{21} & a_{22} & a_{23} & a_{24} & a_{25} & a_{26} \\ a_{31} & a_{32} & a_{33} & a_{34} & a_{35} & a_{36} \end{pmatrix} \begin{pmatrix} X_{1,LC} \\ X_{2,LC} \\ Y_{,LC} \\ Z_{,LC} \\ K_{,LC} \\ L_{,LC} \end{pmatrix}$$

(ii) Applying the set of calibration factors optimized with respect to the achromatic primary to signals provided by the sensor arrangement originating from the light to obtain the optimized intensity value of the achromatic primary. This activity (ii) is carried out, for example, by multiplying the matrix $M_Y$, representing the set of calibration factors optimized with respect to the achromatic primary, with the same vector s:

$$Y_0 = M_Y * s = \begin{pmatrix} b_{11} & b_{12} & b_{13} & b_{14} & b_{15} & b_{16} \end{pmatrix} \begin{pmatrix} X_{1,LC} \\ X_{2,LC} \\ Y_{,LC} \\ Z_{,LC} \\ K_{,LC} \\ L_{,LC} \end{pmatrix}$$

If primaries of the human-standard observer based space xyY are desired as optimized readings obtained by the colorimeter, the optimized reading in x/y can be obtained by applying the chromaticity-optimized set of calibration factors to the signals measured by the sensings and determining the chromaticity values of the resulting chromaticity optimized tristimulus values (X', Y', Z'). The optimized reading in Y is $Y_0$. Hence, the reading can be directly obtained by applying the set of calibration factors optimized with respect to the achromatic primary to the signals measured by the sensings s.

The processing system may be arranged to apply the two sets of calibration factors in a combined manner to the signals measured by the sensings:

The processing system is therefore further arranged to: (i) scale the chromaticity-optimized values (X', Y', Z') with a factor including the optimized reading of the achromatic primary $Y_0$ and the reading of the achromatic primary Y' of the chromaticity-optimized readings of the primaries (X', Y', Z') to obtain readings of the primaries, optimized both in chromaticity x/y and for the achromatic primary Y. The factor is, for example, as described above, the optimized reading of the achromatic primary $Y_0$ divided by the achromatic primary Y' mentioned above.

By performing this scaling, the chromaticity values of the chromaticity-optimized readings of the primaries remain unchanged, as mentioned above in conjunction with the first aspect. Such an exemplary scaling operation is mathematically expressed by:

$$\begin{pmatrix} X_{final} \\ Y_{final} \\ Z_{final} \end{pmatrix} = f(Y_0, Y') \begin{pmatrix} X' \\ Y' \\ Z' \end{pmatrix}$$

The obtained readings $X_{final}$, $Y_{final}$, $Z_{final}$ are, in this example, the readings of the primaries X, Y, Z produced by the colorimeter.

## BRIEF DESCRIPTION OF THE DRAWINGS

Exemplary embodiments of the invention are now described, also with reference to the accompanying drawings, wherein

Fig. 1     illustrates an exemplary calibration arrangement for a colorimeter,

Fig. 2     illustrates a block-diagram of an exemplary method for determining sets of calibration factors and for the use of those calibration factors when measuring light,

Fig. 3     illustrates a block-diagram of choosing the chromaticity-optimized set of calibration factors, the block-diagram is a subroutine of the block diagram of Fig. 2.

Fig. 4     illustrates a block-diagram of choosing the set of calibration factors optimized with respect to the achromatic primary, the block-diagram is a subroutine of the block diagram of Fig. 2.

Fig. 5     illustrates a schematic sectional view of an exemplary light sensor arrangement with six filters, arranged to provide six sensings simultaneously,

Fig. 6     illustrates sectional views of an exemplary light sensor arrangement with a filter-wheel arranged to provide six sensings sequentially,

Fig. 7     illustrates a schematic view of a colorimeter equipped with the sets of calibration factors,

Fig. 8     shows transmission curves of filters and two additional filters that compensate deficiencies of those tristimulus filters,

Fig. 9     illustrates a comparison of chromaticity-distances in xy color space for a set of 20 illuminants determined by the method according to prior art (100) and by the method according to the invention (101).

## DESCRIPTION OF EMBODIMENTS

Fig. 1

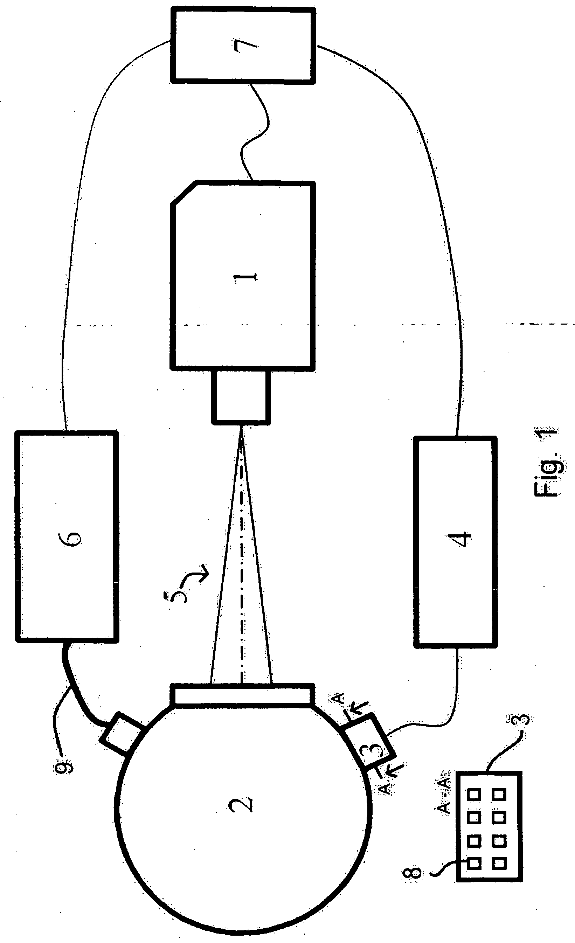

An exemplary calibration arrangement for a colorimeter, in this particular case, an imaging colorimeter 1, is shown in Fig. 1. The imaging colorimeter 1 is illuminated with light of different spectra from a homogenous light source 2. The homogeneous light source 2 is equipped with an illumination unit 3 that is connected to a light-emission control unit 4. The illumination unit comprises an array of different calibration light sources 8, for example LEDs or tungsten lamps of different color that represent the calibration illuminants. A sectional view of the illumination unit is also shown in Fig. 1. The light-emission control unit 4 causes the illumination unit to irradiate light of different spectra into a body of the homogenous light source 2 by activating different calibration light sources 8 successively. The homogeneous light source 2 is realized as an Ulbricht-sphere. The light of the illumination unit is diffusively reflected from the spheres inner surface, such that a homogenous spectral radiance of the light along the spheres inner surface is achieved. As a consequence, the Ulbricht-sphere is particularly suitable to send out the light of the illumination unit with homogenous spectral radiance. The illumination-unit 3, in turn, fills the homogenous light sources body with light. The homogenous light source couples out this light 5 towards the imaging colorimeter 1, in a homogenous manner. A reference spectrometer 6 derives reference tristimulus values and reference chromaticity values by convoluting color matching functions with measured spectral values of the light 5. The reference spectrometer and the colorimeter to be calibrated receive both the light 5 from the homogenous light source 2 originating from the same calibration light source 8. The light 5 is coupled out towards the imaging colorimeter 1 directly and guided to the reference spectrometer 2 via a light duct 9. The derivation of calibration factors 13, 14 (not shown in this Figure) for the imaging colorimeter 1 is in this example carried out by a personal computer 7. The personal computer 7 controls the light-emission control unit 4 by setting the order in which the calibration light sources 8 included in the illumination unit 3 are activated.

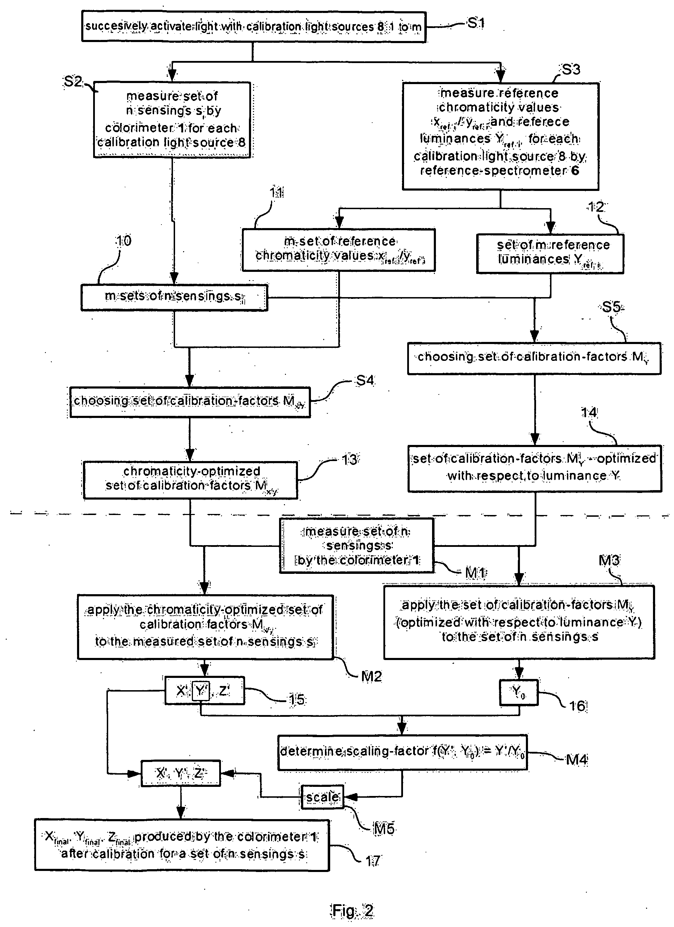

An exemplary method of calibrating a colorimeter, illustrated by the block diagram of Fig. 2, starts with successively activating the calibration light sources 8 that emit light of different spectra, in the activity at box S1.

Figures 2 to 4:

In Fig. 2 an index i, reaching from 1 to m, is assigned to each calibration light source. Therefore, light of a spectrum 1 has the index 1, while light of a spectrum 2 has the index 2, etc. By activating the calibration light sources successively, the imaging colorimeter 1 is successively illuminated with that light by means of the homogenous light source 2. Altogether, the imaging colorimeter 1 is illuminated by the light of m different calibration light sources. The activities at box S2 and S3 are performed for each successively activated calibration light source 8.

At box S2, for each calibration light source 8, a set of n sensings is obtained by the imaging colorimeter 1. The activity at box S2 thereby leads to m sets of n (in this example six) sensings 6 measured by the imaging colorimeter 1. The activity at box S3, namely measuring the light with the reference spectrometer 6 and obtaining reference chromaticity values, is also carried out for each activated LED 8 and leads to m sets of reference chromaticity values $x_{ref\,i}$ / $y_{ref\,i}$ 11 and a set of m reference luminances $Y_{ref\,i}$ 12. One set of chromaticity values and one reference luminance are measured by the reference spectrometer 2 for each light of a different spectrum emitted by a calibration light source 8. The m sets of reference chromaticity values $x_{ref\,i}$ / $y_{ref\,i}$ 11 and the set of m reference luminances $Y_{ref\,i}$ 12 represent the known chromaticity values and the known values of the achromatic primary (luminance Y).

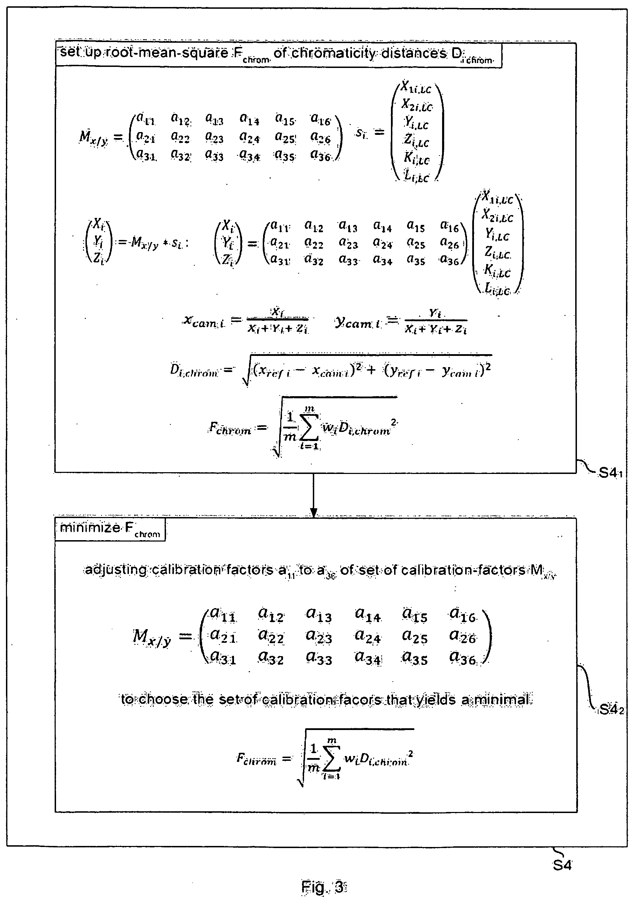

The m sets of n sensings $s_i$ 10 and the m sets of reference chromaticity values 11 are used in the activity at box S4, to obtain a chromaticity-optimized set of calibration factors $M_{x/y}$. This activity at box S4 is further described in conjunction with Fig. 3.

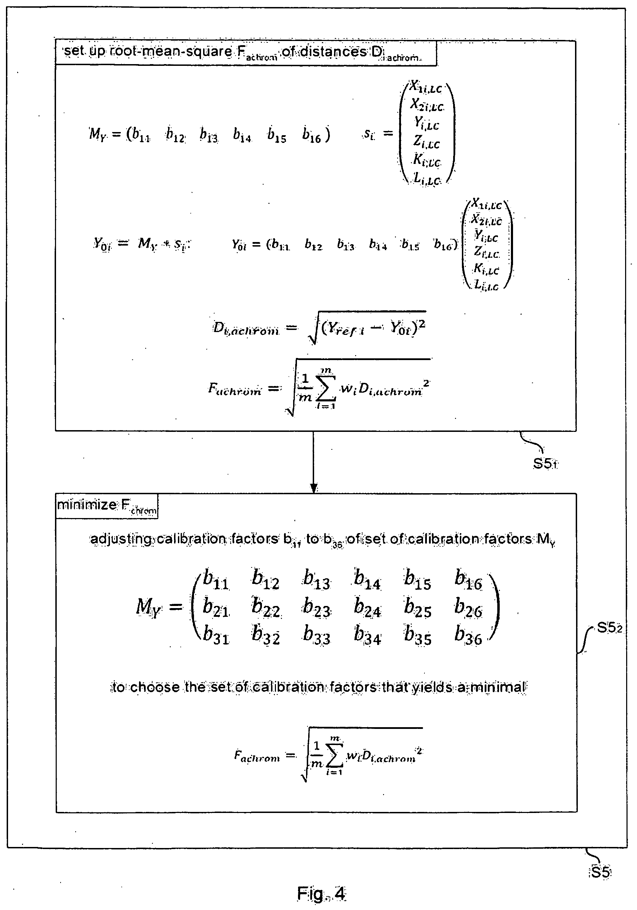

The m sets of n sensings 10 and the set of m reference luminances $Y_{ref\,i}$ 12 are used in the activity at box S5 to obtain a set of calibration factors $M_Y$, optimized with respect to luminance Y 14. This activity is further described in conjunction with Fig. 4.

The activities at boxes S4 and S5 are carried out independently from each other.

By determining the two sets of calibration factors 13, 14, the actual calibration procedure is concluded. If, for examples, primaries of color space xyY are the desired reading, these primaries can be obtained by applying the calibration factors to the sensings to obtain the XYZ values. The x/y readings derived from these XYZ values (x = X/(X + Y + Z), y = Y/(X + Y + Z)) and Y value of these XYZ readings are then the desired xyY reading.

The first part of the block diagram of Fig. 2 that is related to this calibration procedure, is therefore separated with a dashed line from the second part of this block diagram. This part of the block-diagram is related to applying the calibration factors when using a colorimeter equipped with those calibration factors 1' to obtain XYZ readings, optimized with respect to chromaticity and for the achromatic primary, when measuring light 5 with the colorimeter.

At box M1, a set of n sensings is measured by this colorimeter 1'. The chromaticity-optimized set of calibration factors $M_{x/y}$ 13 is applied to this set of n sensings in the activity of box M2. This results in chromaticity-optimized tristimulus values X', Y', Z' 15 that represent the chromaticity-optimized values of primaries of the human standard observer based color space. The set of calibration factors $M_Y$, optimized with respect to luminance Y 14 is applied in the activity at box M3 to the set of n sensings obtained in the activity of box M1. This results in an optimized intensity value of the luminance $Y_0$ 16 that represents the optimized intensity value of the achromatic primary.

In the activity of box M4, a scaling factor, is determined that is a function of the luminance Y' of the chromaticity-optimized tristimulus values X', Y', Z' 15 and the optimal intensity value of the luminance $Y_0$ 16. The scaling factor is the ratio between those two luminances, namely $\frac{Y_0}{Y'}$. In the course of a scaling activity at box M5, the chromaticity-optimized tristimulus values X', Y', Z' 11 are multiplied by the scaling factor determined in the activity at box M4. By scaling these tristimulus values 11 with this scaling factor (activity M5 of the block diagram of Fig. 2), the final tristimulus values $X_{final}$, $Y_{final}$ and $Z_{final}$ 17, i.e. the tristimulus values produced by the colorimeter, are obtained.

These final tristimulus values 17 have optimized chromaticity values x/y and an optimized luminance Y'. Optimized refers here to the context already described in the "general description" above.

The activities of box S4 - choosing the chromaticity optimized set of calibration-factors $M_{x/y}$ illustrated in Fig. 2 - are shown in more detail in Fig. 3: In the activity of box $S4_1$, the root-mean-square of chromaticity distances $D_{i\,chrom}$, is set up as a function of a variable set of calibration factors $M_{x/y}$. In the course of this activity, a chromaticity-distance $D_{i,chrom}$ is determined for each calibration light source with an index i (i = 1 to m). When setting up these chromaticity distances $D_{i,chrom}$, the set of variable calibration factors $M_{x/y}$ is applied to a vector comprising the signals measured by the n (in this example six) sensings $s_i$. The set of calibration factors $M_{x/y}$ is applied by a matrix multiplication that yields three tristimulus values $X_i$, $Y_i$ and $Z_i$ as its result. Chromaticity values $x_{cam\ i}$, $y_{cam\ i}$ are determined as a function of these tristimulus values and are therefore a function of the set of variable calibration factors $M_{x/y}$.

The chromaticity-distances are determined by setting up the Euclidian distance between a vector ($x_{cam\ i}$, $y_{cam\ i}$) for a calibration light source 8 with index i (i = 1 to m) and a reference vector ($x_{ref\ i}$, $y_{ref\ i}$) for the same calibration light source 8 , taken from the m sets of reference chromaticity values $x_{ref\ i}$ / $y_{ref\ i}$ 11. Subsequently, a root-mean-square $F_{chrom}$ of these chromaticity distances, having the chromaticity-distances for each calibration light source 8 as summands, is set up. Each summand of $F_{chrom}$ is weighted with a weigh $w_i$, corresponding to the importance of an optimal result for the light of a certain spectrum.

At box $S4_2$, the chromaticity-related root-mean-square $F_{chrom}$ is minimized by adjusting the variable set of calibration factors $M_{x/y}$. Choosing the set of calibration factors that yields a minimal root-mean-square $F_{chrom}$ is carried out, in this example, by applying a Nelder-Mead algorithm on the chromaticity-related root-mean-square $F_{chrom}$.

The activity of setting up the root-mean-square of the achromatic distances $F_{achrom}$ and subsequently choosing the set of calibration factors that minimizes this root-mean-square (the activity of box S5 in Fig. 2) is shown in more detail in Fig. 4. The activity of setting up the root-mean-square $F_{achrom}$, related to the achromatic primary is depicted in $S5_1$ and is analogous to the activity of setting up the chromaticity-related root-mean-square $F_{chrom}$.

For each calibration light source with index i (i = 1 to m), a variable set of calibration factors, represented by the matrix $M_Y$, is applied to the signals measured by the six sensings for a respective calibration light source with index i, represented by vector $s_i$, the respective n sensings are taken out of the m sets of n sensings $s_i$ 10. The result of these matrix multiplications is a luminance $Y_{0i}$ for a certain calibration light source with a certain index i, expressed by the set of variable calibration factors. The achromatic distances $D_{i,\ achrom}$ are the Euclidian distances between (i) the reference luminances $Y_{ref\ i}$, taken from the set of m reference luminances 12, for a certain calibration light source 8 with index a certain index i and (ii) the result of the above mentioned matrix multiplication, namely the luminance $Y_{0i}$ for the light of the same calibration light source 8.

Subsequently, an achromatic-distance related root-mean-square $F_{achrom}$ is set up. The summands of this root-mean-square are the achromatic distances $D_{i,\ achrom}$ for each calibration light source 8. These summands are weighted in analogy to the summands of the chromaticity-related root-mean-square of Fig. 3.

In analogy to the activity discussed in conjunction with Fig. 3, at box S5 the set of calibration factors optimized with respect to luminance Y is chosen, such that the achromatic-distance related root-mean-square $F_{achrom}$ is minimized. The set of calibration factors, optimized with respect to luminance Y, represents the set of calibration factors optimized with respect to the achromatic primary. The root-mean-square $F_{achrom}$ can be minimizied in the same way as described above. However, in the particular case of Y, the "ordinary least square" approach can be used to obtain the set of calibration factors optimized with respect to the achromatic primary non-iterative. This is the particular case of Y, because the equation system for minimizing the root-mean-square $F_{achrom}$ is linear.

Fig. 5

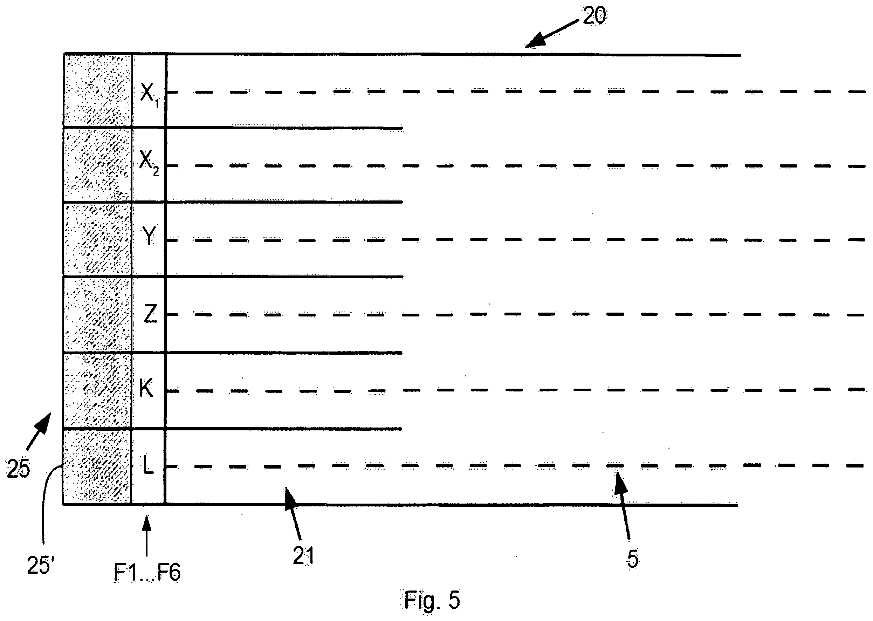

The exemplary sensor arrangement 20, a schematic slice view of which is shown in Fig. 5, provides the signals measured by the six sensings at once. The exemplary light sensor arrangement of Fig. 5 is capable of providing six sensings simultaneously, by means of six separate beam paths 21, guiding light 5 to be measured to six separate photosensors with filters F1-F6 of different spectral sensitivities. The filters F1-F6 are tristimulus filters $X_1$, $X_2$, Y and Z and two additional filters K and L. These two additional filters compensate deficiencies of the tristimulus filters in certain parts of the spectrum. In this example, the tristimulus filter taken alone would lead to measurement errors when measuring light with a wavelength of 460 to 560 nm, as shown in Fig. 12.

Figure 6

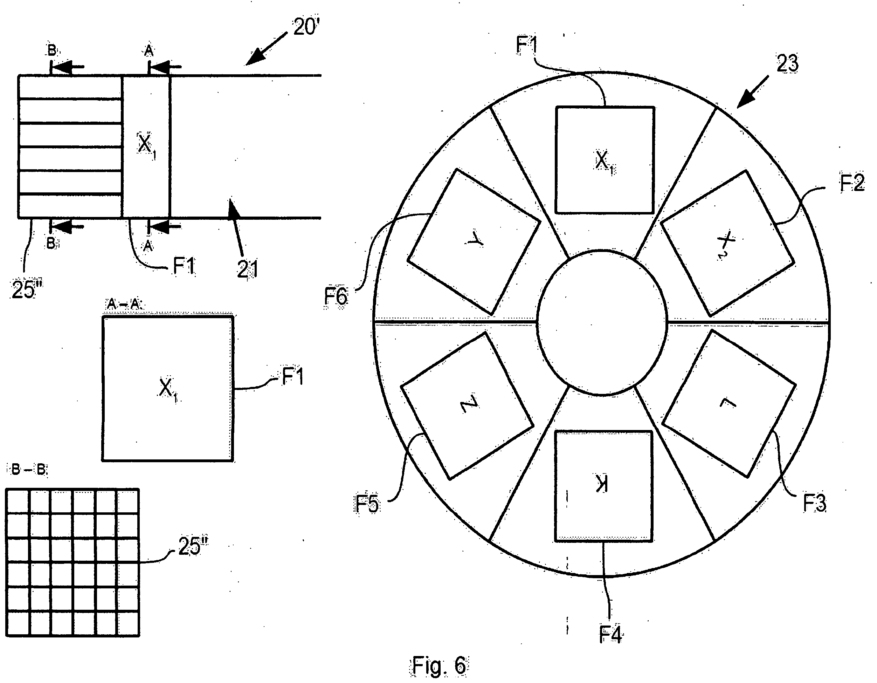

Schematic sectional views of an alternative sensor arrangement 20', arranged to obtain the six signals measured by the sensings sequentially, are depicted in Fig. 6. A lense image of the light 5, provided by a lense 21 is chromatically filtered by a filter F1, in this example a $X_1$ filter. The light 5 passing filter F1 is converted into electrical signals corresponding to the intensity of the light by a monochromatic camera sensor in CCD technology 25'. The monochromatic camera sensor 25' is arranged to measure a spatially extended light distribution. As a lense 26 is placed in the beam path leading light to the monochromatic camera sensor, the sensor arrangement 20' of Fig. 6 functions as an imaging system. Different filters F1-F6 can be placed in a filtering position mechanically, by rotation of the filter wheel 23 to provide six sensings. Each pixel can be seen as a separate colorimeter. However, provided that the components of the sensor arrangement 20' have homogenous properties, the same set of calibration factors can be applied for each pixel depicted by the sensor arrangement 20'. The sectional view of this sensor arrangement 20' is cut once along the B-B axis (shown by dashed lines) and once along the A-A axis also shown by dashed lines. Two front views of these slices are also depicted by Fig.

6. The slice view on the cut along the A-A axis shows a front view of the filter F1, while the slice view on the cut at the B-B axis shows a front view on the monochromatic camera sensor (CCD technology) 25'. The six sensings are obtained by sequentially moving the filters F1-F6 into a filtering position, that is, in this example, the position between the beam path 21 and the camera sensor 25".

Fig. 7

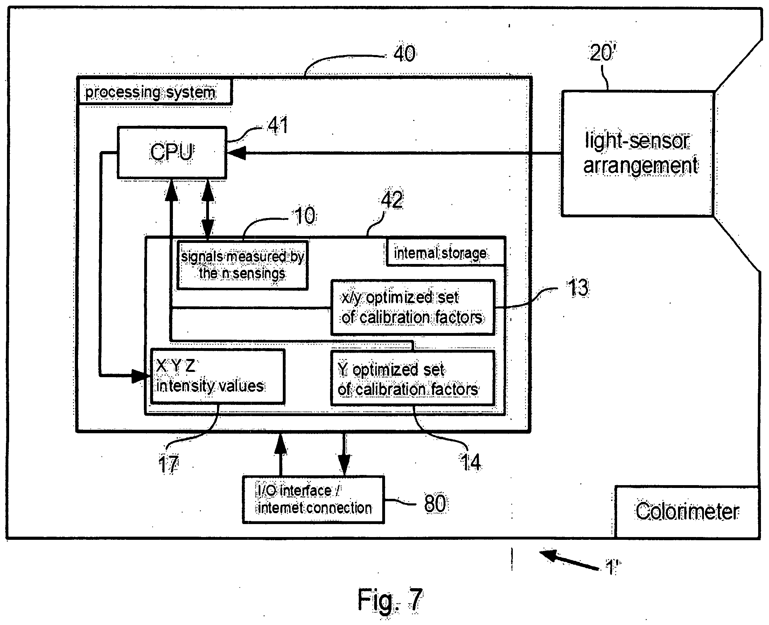

A schematic view of an imaging colorimeter 1', equipped with the sensor arrangement 20, 20' and the chromaticity-optimized (here x/y - optimized) set of calibration factors 13 and the set of calibration factors optimized with respect to luminance 14 is given by Fig. 7. When light 5 enters the colorimeter, the signals measured by the n sensings are obtained by the sensor arrangement. These signals are fed into the imaging colorimeters 1' processing system 40. This processing system comprises a central processing unit (CPU) 41 and an internal storage 42. The CPU 41 is programmed to apply the chromaticity-optimized calibration factors 13 and the set of calibration factors optimized with respect to luminance Y 14, stored in the internal storage 42, to the signals measured by the n sensings. The resulting chromaticity-optimized values X' Y' Z' 11 and the resulting optimized luminance value $Y_0$ are stored in the internal storage 42 (not shown in Fig. 7). The CPU 41 is further programmed to calculate the scaling factor that is a function of the optimized luminance value $Y_0$ and the luminance value Y', namely $\frac{Y_0}{Y'}$. The CPU 41 is programmed to scale the chromaticity-optimized values X' Y' Z' by these factors to obtain the final tristimulus values X Y Z 17. The imaging colorimeter 1' is also equipped with an I/O interface 80 in order to be connectable to personal computers for data exchange and/or to be connectable to the internet via this interface, for example for retrieving sets of calibration factors from the internet. The I/O interface is, for example, a USB port. The imaging colorimeter 1' may alternatively be equipped with an internet connection for retrieving sets of calibration factors from the internet.

Fig. 8

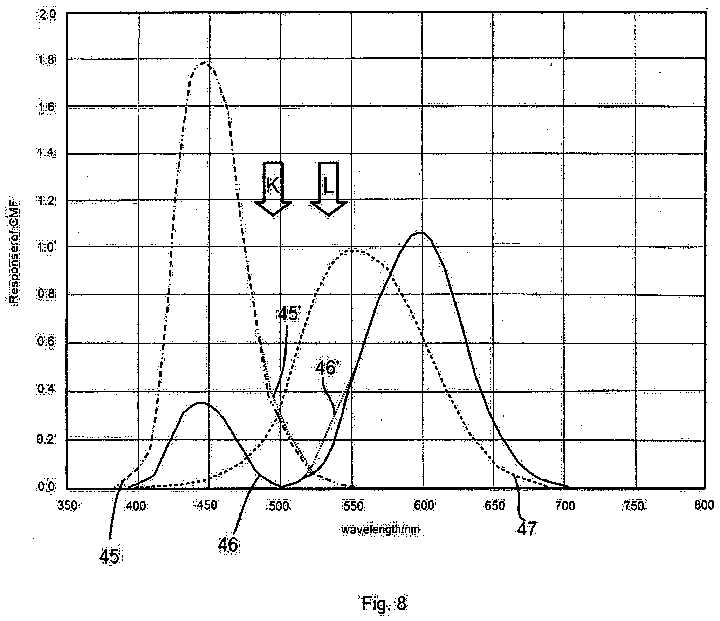

Spectral curves representing the filter function of the tristimulus filter $X_1$, $X_2$, Y and Z of the sensor arrangement are illustrated by Fig. 8. Filter curve 46 represents the $X_1 + X_2$ filter response that mimics the tristimulus primary X response of a human standard observer. Filter curve 45 represents the Z filter response and filter curve 47 represents the Y filter response. The manufacturing process of such filter allows only to approximate the desired transmission curve to a certain degree. Deviations of several percent in certain spectral regions have to be expected. The responses of the Z filter and the $X_2$ filter (the $X_2$ filter is the filter that yields the peak of the $X_1 + X_2$ filter curve 46 between 500 and 700 nm) have a deviation from an ideal filter curve. The deviating part of the Z filter response curve 45 is marked by reference sign 45', whereas the deviating part of the $X_2$ filter response is marked by reference sign 46'. These deviations of the filter curves are compensated by the two additional filters K and L. This compensation is illustrated in Fig. 8 by the dashed lines that complement the $X_1 + X_2$ filter curve 46 and the Z filter curve 45. In other exemplary embodiments the sensor arrangement is equipped with more than six filters.

Fig. 9

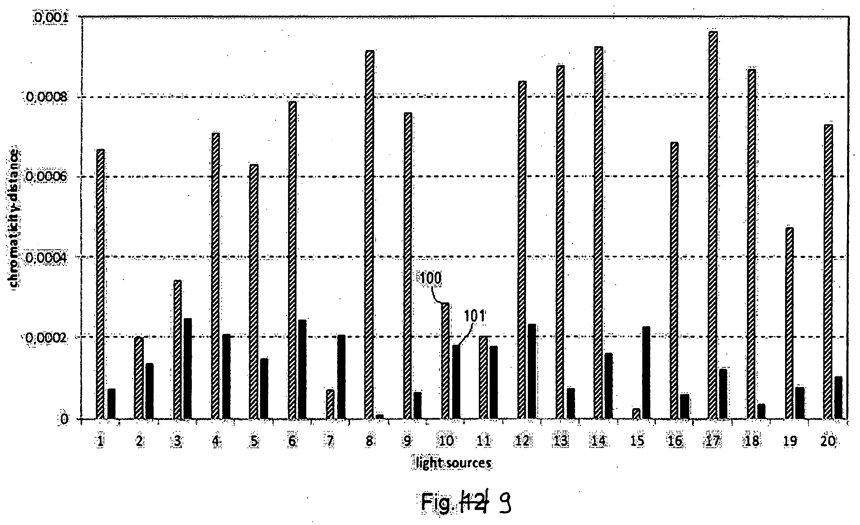

The chromaticity-distances in xy color space 100, 101 shown in Fig. 9 were determined for 20 different light sources, i.e. light sources having different spectra. The chromaticity distances 100, illustrated by the hatched bars in Fig. 9, were determined by minimizing the color-distance of the tristimulus values (XYZ optimization) according to prior art.

The chromaticity-distances 101, obtained by minimizing chromaticity-differences according to the invention (x/y optimization), are illustrated by the filled-out black bars of Fig. 12. As can be seen from the Figure, the chromaticity-distances 101 are substantially smaller than the chromaticity distances 100.

Furthermore, it should be mentioned that not only the chromaticity distances of primaries of a human-standard observer based space are minimized, but also the achromatic-distances are optimized, when the method as described above is applied. The calibration factors are chosen as such by the method, that both targets are reached. When applying methods as presented in the prior art, mentioned in the outset, only the chromaticity-distance would be minimized, at the expense of the achromatic primary.

Although certain products constructed in accordance with the teachings of the invention have been described herein, the scope of coverage of this patent is not limited thereto. On the contrary, this patent covers all embodiments of the teachings of the invention fairly falling within the scope of the appended claims either literally or under the doctrine of equivalents.

**Claims**

1.  A method of calibrating a colorimeter (1) arranged to measure light (5) with a sensor arrangement (20) providing n sensings with different spectral sensitivities, n being a number greater than or equal to four, wherein a sensing corresponds to the response of a sensor in the sensor arrangement, and to measure that light in the form of three primaries of a human-standard-observer-based color space, wherein one of the three primaries is an achromatic primary, the method comprising:

    - generating m sets of n sensings (10) for m calibration illuminants (8) with known values of the three primaries, wherein m is a number greater than n,
    - determining a first set of calibration factors (13) that yields chromaticity-optimized values of the primaries when applied to signals measured by the n sensings,
    **characterized in that**
    the first set of calibration factors is determined by minimizing a norm of chromaticity distances of all calibration illuminants between (i) the chromaticity values retrieved by applying the first set of calibration factors (13) to the signals measured by the n sensings, and (ii) known chromaticity values,
    and **in that** the method further comprises
    - determining a second set of calibration factors (14) that yields an optimized value of the achromatic primary when applied to the signals measured by the n sensings,
    by minimizing a norm of achromatic distances between (i) values of the achromatic primary retrieved by applying the second set of calibration factors (14) to the signals measured by the n sensings, and (ii) the known values of the achromatic primary,
    wherein light (5) is measured by the colorimeter (1) after the calibration by applying the first set of calibration factors (13) to signals measured by the n sensings to obtain chromaticity-optimized tristimulus values (15) and by applying the second set of calibration factors (14) to these signals to obtain an optimized value of the achromatic tristimulus (16), and by scaling the chromaticity-optimized tristimulus values (15) with a factor of the ratio of the optimized value of the achromatic tristimulus divided by the achromatic value of the chromaticity-optimized tristimulus values.

2.  The method of claim 1, wherein the m sets of n sensings are generated by separately illuminating the colorimeter (1) with m calibration illuminants (8).

3.  The method of claim 1, wherein the m sets of n sensings are generated by measuring the spectral sensitivity of the n sensors and the spectral emission of the calibration illuminants (8) and thereof compute the sensings.

4.  The method of any one of claim 1 to 3, wherein the known values of the three primaries of the calibration illuminants are obtained by measuring light (5) of the calibration illuminants (1) with a reference-spectrometer (6).

5.  The method of any one of claims 1 to 4, wherein the chromaticity and/or the achromatic distances are Euclidean distances.

6.  The method of any one of claims 1 to 5, wherein
    the norm of the chromaticity distances is a root-mean-square of the chromatic distances, obtained for the m calibration illuminants (8), and/or
    the norm of the achromatic distances is a root-mean-square of the achromatic distances, obtained for the m calibration illuminants (8).

7.  The method of any one of claim 1 to 5, wherein in response to at least one chromaticity distance or at least one achromatic distance exceeding a given penalty-value when minimizing the chromaticity distance or achromatic distance by repeatedly varying a variable set of calibration factors (13, 14), the at least one exceeding chromaticity distance or exceeding achromatic distance is weighted higher in the subsequent variation of the set of variable calibration factors (13, 14) than in the preceding variation of the sets of variable calibration factors (13, 14), wherein the exceeding chromaticity distance and/or exceeding achromatic distance is weighted higher than the chromaticity distances and/or achromatic distances that do not exceed this penalty distance.

8.  The method of any one of claims 1 to 7, wherein the sensor arrangement (20) comprises n photo sensors (25') and n filters (F1...F6) with different spectral sensitivities coupled to the corresponding n photo sensors (25'), to provide the n sensings simultaneously.

9. The method of any one of claims 1 to 7, wherein the sensor arrangement comprises n movable filters with different spectral sensitivities and a photo sensor (25), wherein the filters are sequentially moved into a filtering position, to provide the n sensings sequentially.

10. The method of claim 9, wherein the photo sensor is a CCD or CMOS sensor of a monochromatic camera (25').

11. The method of any one of claims 1 to 10, wherein at least one of the calibration illuminants (8) has a wavelength distribution with a full-width-half-maximum in a range from 10 nm to 50 nm.

12. The method of any one of claims 1 to 11, wherein optimized readings in chromaticity and for the achromatic primary are obtained for at least one of the color spaces xyY, CIELAB and CIELUV.

13. A colorimeter (1) for providing measurements of light (5) with regard to primaries of a human-standard-observer-based color space, the colorimeter (1) being equipped with a first set and a second set of calibration factors (13, 14) obtained by the method of any one of the claims 1 to 12, the colorimeter comprising:

a sensor arrangement (20) providing n sensings of the light (5) with different spectral sensitivities, n being a number greater than or equal to four,
a processing system (40) arranged to measure the light (5) with respect to the three primaries of the human-standard-observer based color space from the n sensings, by:

applying the first set of calibration factors (13) to signals provided by the sensor arrangement to obtain chromaticity-optimized readings of the tristimulus values,
applying the second set of calibration factors (14) to signals provided by the sensor arrangement to obtain the optimized reading of the achromatic tristimulus value,
wherein the processing system (40) is arranged to scale the chromaticity-optimized tristimulus values (15) obtained with a factor of the ratio of the optimized value of the achromatic tristimulus (16) divided by the achromatic value of the chromaticity-optimized tristimulus values.

14. The colorimeter of claim 13, further arranged according to any one of claims 8, 9, 10.

**Patentansprüche**

1. Verfahren zum Kalibrieren eines Kolorimeters (1), das dafür eingerichtet ist, Licht (5) mit einer Sensoranordnung (20) zu messen, die n Aufnahmen mit unterschiedlichen spektralen Empfindlichkeiten bereitstellt, wobei n eine Zahl größer als oder gleich vier ist und wobei eine Aufnahme einem Ansprechen eines Sensors in der Sensoranordnung entspricht, und das Licht in Form von drei Hauptkomponenten eines auf einem menschlichen Normalbeobachter basierenden Farbraums zu messen, wobei eine der drei Hauptkomponenten eine farblose Hauptkomponente ist und wobei das Verfahren Folgendes umfasst:

- Erzeugen von m Sätzen aus n Aufnahmen (10) für m Kalibrierlichtquellen (8) mit bekannten Werten für die drei Hauptkomponenten, wobei m eine Zahl größer als n ist,
- Bestimmen eines ersten Satzes von Kalibrierfaktoren (13), der farbart-optimierte Werte der Hauptkomponenten ergibt, wenn er auf Signale angewendet wird, die in den n Aufnahmen gemessen werden,
**dadurch gekennzeichnet, dass**
der erste Satz Kalibrierfaktoren bestimmt wird, indem eine Norm von Farbartabständen aller Kalibrierlichtquellen minimiert wird, und dies zwischen (i) den Farbartwerten, die erhalten werden, indem der erste Satz Kalibrierfaktoren (13) auf die Signale angewendet wird, die von den n Aufnahmen erfasst werden, und (ii) bekannten Farbartwerten,
und dadurch, dass das Verfahren außerdem Folgendes umfasst:

- Bestimmen eines zweiten Satzes von Kalibrierfaktoren (14), der einen optimierten Wert für die farblose Hautkomponente ergibt, wenn er auf die Signale angewendet wird, die von den n Aufnahmen erfasst werden, indem eine Norm von Farblosabständen zwischen (i) Werten der farblosen Hauptkomponente, die erhalten wird, indem der zweite Satz Kalibrierfaktoren (14) auf die Signale angewendet wird, die von den n Aufnahmen erfasst werden, und (ii) den bekannten Werten der farblosen Hauptkomponente minimiert wird,
wobei Licht (5) durch das Kolorimeter (1) nach der Kalibrierung gemessen wird, indem der erste Satz Kalibrierfaktoren (13) auf Signale angewendet wird, die durch die n Aufnahmen erfasst werden, um farbart-optimierte Tristimuluswerte (15) zu erhalten, und indem der zweite Satz Kalibrierfaktoren (14) auf diese Signale angewendet wird, um einen optimierten Wert für den farblosen Tristimulus (16) zu erhalten, und indem die farbart-optimierten Tristimuluswerte (15) mit einem Faktor des Verhältnisses des optimierten Werts des farblosen Tristimulus geteilt durch den Farbloswert der farbart-optimierten Tristimuluswerte skaliert werden.

2. Verfahren nach Anspruch 1, wobei die m Sätze aus n Aufnahmen erzeugt werden, indem das Kolorimeter (1) getrennt mit m Kalibrierlichtquellen (8) beleuchtet wird.

3. Verfahren nach Anspruch 1, wobei die m Sätze aus n Aufnahmen erzeugt werden, indem die spektrale Empfindlichkeit der n Sensoren und die spektrale Abstrahlung der Kalibrierlichtquellen (8) gemessen wird und die Aufnahmen daraus berechnet werden.

4. Verfahren nach einem der Ansprüche 1 bis 3, wobei die bekannten Werte der drei Hauptkomponenten der Kalibrierlichtquellen erhalten werden, indem das Licht (5) der Kalibrierlichtquellen (1) mit einem Referenzspektrometer (6) gemessen wird.

5. Verfahren nach einem der Ansprüche 1 bis 4, wobei die Farbart- und/oder die Farblosabstände euklidische Abstände sind.

6. Verfahren nach einem der Ansprüche 1 bis 5, wobei
die Norm der Farbartabstände ein quadratisches Mittel der Farbartabstände ist, die für die m Kalibrierlichtquellen (8) erhalten werden, und/oder
die Norm der Farblosabstände ein quadratisches Mittel der Farblosabstände ist, die für die m Kalibrierlichtquellen (8) erhalten werden.

7. Verfahren nach einem der Ansprüche 1 bis 5, wobei in Reaktion darauf, dass wenigstens ein Farbartabstand oder wenigstens ein Farblosabstand einen vorgegebenen Penaltywert übersteigt, wenn der Farbartabstand oder der Farblosabstand durch das wiederholte Variieren eines variablen Satzes von Kalibrierfaktoren (13, 14) minimiert wird, der wenigstens eine übersteigende Farbartabstand oder übersteigende Farblosabstand in den nachfolgenden Variationen des Satzes von variablen Kalibrierfaktoren (13, 14) höher gewichtet wird als in der vorhergehenden Variation der Sätze von variablen Kalibrierfaktoren (13, 14), wobei der übersteigende Farbartabstand und/oder übersteigende Farblosabstand höher gewichtet wird als die Farbartabstände und/oder Farblosabstände, die den Penaltyabstand nicht übersteigen.

8. Verfahren nach einem der Ansprüche 1 bis 7, wobei die Sensoranordnung (20) n Fotosensoren (25') und n Filter (F1 ... F6) mit unterschiedlichen spektralen Empfindlichkeiten, die mit den zugehörigen n Fotosensoren (25') gekoppelt sind, umfasst, um die n Aufnahmen gleichzeitig bereitzustellen.

9. Verfahren nach einem der Ansprüche 1 bis 7, wobei die Sensoranordnung n bewegliche Filter mit unterschiedlichen spektralen Empfindlichkeiten und einen Fotosensor (25) umfasst, wobei die Filter sequenziell in eine Filterungsposition bewegt werden, um die n Aufnahmen sequenziell bereitzustellen.

10. Verfahren nach Anspruch 9, wobei der Fotosensor ein CCD- oder CMOS-Sensor einer monochromatischen Kamera (25') ist.

11. Verfahren nach einem der Ansprüche 1 bis 10, wobei wenigstens eine der Kalibrierlichtquellen (8) eine Wellenlängenverteilung mit einer Halbwertsbreite in einem Bereich von 10 nm bis 50 nm hat.

12. Verfahren nach einem der Ansprüche 1 bis 11, wobei optimierte Messwerte für die Farbart und für die farblose Hauptkomponente für wenigstens einen der folgenden Farbräume erhalten werden: xyY, CIELAB und CIELUV.

13. Kolorimeter (1) zum Bereitstellen von Messungen für Licht (5) in Bezug auf Hauptkomponenten eines auf einem menschlichen Normalbeobachter basierenden Farbraums, wobei das Kolorimeter (1) mit einem ersten Satz und einem zweiten Satz von Kalibrierfaktoren (13, 14) ausgestattet ist, die durch das Verfahren nach einem der Ansprüche 1 bis 12 erhalten werden, wobei das Kolorimeter Folgendes umfasst:

eine Sensoranordnung (20), die n Aufnahmen des Lichts (5) mit unterschiedlichen spektralen Empfindlichkeiten bereitstellt, wobei n eine Zahl größer als oder gleich vier ist,
ein Verarbeitungssystem (40), das dafür eingerichtet ist, aus den n Aufnahmen das Licht (5) in Bezug auf die drei Hauptkomponenten des auf einem menschlichen Normalbeobachter basierenden Farbraums zu messen, und dies durch:

Anwenden des ersten Satzes Kalibrierfaktoren (13) auf von der Sensoranordnung bereitgestellte Signale, um farbart-optimierte Messwerte der Tristimuluswerte zu erhalten,
Anwenden des zweiten Satzes Kalibrierfaktoren (14) auf von der Sensoranordnung bereitgestellte Signale, um den optimierten Messwert für den farblosen Tristimuluswert zu erhalten,
wobei das Verarbeitungssystem (40) dafür eingerichtet ist, die erhaltenen farbart-optimierten Tristimuluswerte (15) mit einem Faktor des Verhältnisses des optimierten Werts des farblosen Tristimulus (16) geteilt durch den Farbloswert der farbart-optimierten Tristimuluswerte zu skalieren.

**14.** Kolorimeter nach Anspruch 13, das außerdem entsprechend einem der Ansprüche 8, 9, 10 eingerichtet ist.


## Revendications

**1.** Procédé d'étalonnage d'un colorimètre (1) agencé pour mesurer la lumière (5) à l'aide d'un agencement de capteurs (20) fournissant n détections à différentes sensibilités spectrales, n étant un nombre supérieur ou égal à quatre, dans lequel une détection correspond à la réponse d'un capteur de l'agencement de capteurs, et pour mesurer cette lumière sous la forme de trois primaires est un primaire achromatique, le procédé comprenant :

- la génération de m ensembles de n détections (10) pour m illuminants d'étalonnage (8) avec des valeurs connues des trois primaires, m étant un nombre supérieur à n,
- la détermination d'un premier ensemble de facteurs d'étalonnage (13) qui produit des valeurs de chromaticité optimisées des primaires quand ils sont appliqués à des signaux mesurés par les n détections,
**caractérisé en ce que**
le premier ensemble de facteurs d'étalonnage est déterminé en minimisant une norme de distances de chromaticité de tous les illuminants d'étalonnage entre (i) les valeurs de chromaticité extraites en appliquant le premier ensemble de facteurs d'étalonnage (13) aux signaux mesurés par les n détections, et(ii) des valeurs de chromaticité connues,
et **en ce que** le procédé comprend en outre
- la détermination d'un second ensemble de facteurs d'étalonnage (14) qui produit une valeur optimisée du primaire achromatique quand ils sont appliqués aux signaux mesurés par les n détections,
en minimisant une norme de distances achromatiques entre (i) des valeurs du primaire achromatique extraites en appliquant le second ensemble de facteurs d'étalonnage (14) aux signaux mesurés par les n détections, et (ii) les valeurs connues du primaire achromatique,
dans lequel la lumière (5) est mesurée par le colorimètre (1) après l'étalonnage en appliquant le premier ensemble de facteurs d'étalonnage (13) à des signaux mesurés par les n détections afin d'obtenir des valeurs de tristimulus à chromaticité optimisée (15) et en appliquant le second ensemble de facteurs d'étalonnage (14) à ces signaux afin d'obtenir une valeur optimisée du tristimulus achromatique (16), et en mettant en corrélation les valeurs de tristimulus à chromaticité optimisée (15) avec un facteur du rapport de la valeur optimisée du tristimulus achromatique divisée par la valeur achromatique des valeurs de tristimulus à chromaticité optimisée.

**2.** Procédé selon la revendication 1, dans lequel les m ensembles de n détections sont générés en éclairant séparément le colorimètre (1) à l'aide de m illuminants d'étalonnage (8).

**3.** Procédé selon la revendication 1, dans lequel les m ensembles de n détections sont générés en mesurant la sensibilité spectrale des n capteurs et l'émission spectrale des illuminants d'étalonnage (8) et calculent les détections.

**4.** Procédé selon l'une quelconque des revendications 1 à 3, dans lequel les valeurs connues des trois primaires des illuminants d'étalonnage sont obtenues en mesurant la lumière (5) des illuminants d'étalonnage (1) avec un spectromètre de référence (6).

**5.** Procédé selon l'une quelconque des revendications 1 à 4, dans lequel la chromaticité et/ou les distances achromatiques sont des distances euclidiennes.

**6.** Procédé selon l'une quelconque des revendications 1 à 5, dans lequel
la norme des distances de chromaticité est une moyenne quadratique des distances chromatiques, obtenue pour les m illuminants d'étalonnage (8), et/ou
la norme des distances achromatiques est une moyenne quadratique des distances achromatiques, obtenue pour les m illuminants d'étalonnage (8).

**7.** Procédé selon l'une quelconque des revendications 1 à 5, dans lequel, en réponse à au moins une distance de chromaticité ou au moins une distance achromatique excédant une valeur de pénalité donnée quand on minimise la distance de chromaticité ou distance achromatique en faisant varier à plusieurs reprises un ensemble variable de facteurs d'étalonnage (13, 14), l'au moins une distance de chromaticité excédante ou distance achromatique excédante est pondérée à un niveau plus élevé dans la variation subséquente de l'ensemble de facteurs d'étalonnage variables (13, 14) que dans la variation précédente des ensembles de facteurs d'étalonnage variables (13, 14), dans lequel la distance de chromaticité excédante et/ou la distance achromatique excédante est pondérée à un niveau plus élevé que les distances de chromaticité et/ou distances achromatiques qui n'excèdent pas cette distance de pénalité.

**8.** Procédé selon l'une quelconque des revendications 1 à 7, dans lequel l'agencement de capteurs (20) comprend n photo-capteurs (25') et n filtres (F1...F6) ayant différentes sensibilités spectrales couplés aux n photo-capteurs correspondants (25'), pour fournir les n détections simultanément.

**9.** Procédé selon l'une quelconque des revendications 1 à 7, dans lequel l'agencement de capteurs comprend n filtres mobiles à différentes sensibilités spectrales et un photo-capteur (25), dans lequel les filtres sont séquentiellement déplacés dans une position de filtrage, pour fournir les n détections de manière séquentielle.

**10.** Procédé selon la revendication 9, dans lequel le photo-capteur est un capteur CCD ou CMOS d'une caméra monochromatique (25').

**11.** Procédé selon l'une quelconque des revendications 1 à 10, dans lequel au moins un des illuminants d'étalonnage (8) a une répartition de longueur d'onde ayant une largeur totale à mi-hauteur dans une plage de 10 nm à 50 nm.

**12.** Procédé selon l'une quelconque des revendications 1 à 11, dans lequel des lectures optimisées de chromaticité et pour le primaire achromatique sont obtenues pour au moins un des espaces colorimétriques xyY, CIELAB et CIELUV.

**13.** Colorimètre (1) pour fournir des mesures de lumière (5) concernant des primaires d'un espace colorimétrique basé sur un observateur standard humain, le colorimètre (1) étant équipé d'un premier ensemble et d'un second ensemble de facteurs d'étalonnage (13, 14) obtenus par le procédé selon l'une quelconque des revendications 1 à 12, le colorimètre comprenant :

un agencement de capteurs (20) fournissant n détections de la lumière (5) à différentes sensibilités spectrales, n étant un nombre supérieur ou égal à quatre,
un système de traitement (40) agencé pour mesurer la lumière (5) par rapport aux trois primaires de l'espace colorimétrique basé sur un observateur standard humain provenant des n détections, en :

appliquant le premier ensemble de facteurs d'étalonnage (13) à des signaux fournis par l'agencement de capteurs afin d'obtenir des lectures à chromaticité optimisée des valeurs de tristimulus,
appliquant le second ensemble de facteurs d'étalonnage (14) à des signaux fournis par l'agencement de capteurs afin d'obtenir la lecture optimisée des valeurs de tristimulus achromatique,
dans lequel le système de traitement (40) est agencé pour mettre en corrélation les valeurs de tristimulus à chromaticité optimisée (15) obtenues avec un facteur du rapport de la valeur optimisée du tristimulus achromatique (16) divisée par la valeur achromatique des valeurs de tristimulus à chromaticité optimisée.

**14.** Colorimètre selon la revendication 13, agencé en outre selon l'une quelconque des revendications 8, 9, 10.

Fig. 1

EP 3 021 096 B1

EP 3 021 096 B1

successively activate light with calibration light sources 8 1 to m — S1

S2 — measure set of n sensings s by colorimeter 1 for each calibration light source 8

S3 — measure reference chromaticity values $x_{ref,i}/y_{ref,i}$ and referece luminances $Y_{ref,i}$ for each calibration light source 8 by reference-spectrometer 6

11 — m set of reference chromaticity values $x_{ref,i}/y_{ref,i}$

12 — set of m reference luminances $Y_{ref,i}$

10 — m sets of n sensings $s_i$

S5 — choosing set of calibration-factors $M_Y$

S4 — choosing set of calibration-factors $M_{xy}$

14 — set of calibration-factors $M_Y$ optimized with respect to luminance Y

13 — chromaticity-optimized set of calibration-factors $M_{xy}$

measure set of n sensings s by the colorimeter 1 — M1

M3 — apply the set of calibration-factors $M_Y$ (optimized with respect to luminance Y) to the set of n sensings s

apply the chromaticity-optimized set of calibration factors $M_{xy}$ to the measured set of n sensings s — M2

X', Y', Z' — 15

$Y_0$ — 16

determine scaling-factor $f(Y', Y_0) = Y'/Y_0$ — M4

X', Y', Z'

scale — M5

$X_{final}, Y_{final}, Z_{final}$ produced by the colorimeter 1 after calibration for a set of n sensings s — 17

Fig. 2

27

set up root-mean-square $F_{chrom}$ of chromaticity distances $D_{i,chrom}$

$$M_{x/y} = \begin{pmatrix} a_{11} & a_{12} & a_{13} & a_{14} & a_{15} & a_{16} \\ a_{21} & a_{22} & a_{23} & a_{24} & a_{25} & a_{26} \\ a_{31} & a_{32} & a_{33} & a_{34} & a_{35} & a_{36} \end{pmatrix} \quad s_i = \begin{pmatrix} X_{1i,LC} \\ X_{2i,LC} \\ Y_{i,LC} \\ Z_{i,LC} \\ K_{i,LC} \\ L_{i,LC} \end{pmatrix}$$

$$\begin{pmatrix} X_i \\ Y_i \\ Z_i \end{pmatrix} = M_{x/y} * s_i : \qquad \begin{pmatrix} X_i \\ Y_i \\ Z_i \end{pmatrix} = \begin{pmatrix} a_{11} & a_{12} & a_{13} & a_{14} & a_{15} & a_{16} \\ a_{21} & a_{22} & a_{23} & a_{24} & a_{25} & a_{26} \\ a_{31} & a_{32} & a_{33} & a_{34} & a_{35} & a_{36} \end{pmatrix} \begin{pmatrix} X_{1i,LC} \\ X_{2i,LC} \\ Y_{i,LC} \\ Z_{i,LC} \\ K_{i,LC} \\ L_{i,LC} \end{pmatrix}$$

$$x_{cam\,i} = \frac{X_i}{X_i + Y_i + Z_i} \qquad y_{cam\,i} = \frac{Y_i}{X_i + Y_i + Z_i}$$

$$D_{i,chrom} = \sqrt{(x_{ref\,i} - x_{cam\,i})^2 + (y_{ref\,i} - y_{cam\,i})^2}$$

$$F_{chrom} = \sqrt{\frac{1}{m} \sum_{i=1}^{m} w_i D_{i,chrom}^2}$$

S4₁

minimize $F_{chrom}$

adjusting calibration factors $a_{11}$ to $a_{36}$ of set of calibration-factors $M_{x/y}$

$$M_{x/y} = \begin{pmatrix} a_{11} & a_{12} & a_{13} & a_{14} & a_{15} & a_{16} \\ a_{21} & a_{22} & a_{23} & a_{24} & a_{25} & a_{26} \\ a_{31} & a_{32} & a_{33} & a_{34} & a_{35} & a_{36} \end{pmatrix}$$

to choose the set of calibration-facors that yields a minimal

$$F_{chrom} = \sqrt{\frac{1}{m} \sum_{i=1}^{m} w_i D_{i,chrom}^2}$$

S4₂

S4

Fig. 3

set up root-mean-square $F_{achrom}$ of distances $D_{i,achrom}$.

$$M_Y = \begin{pmatrix} b_{11} & b_{12} & b_{13} & b_{14} & b_{15} & b_{16} \end{pmatrix} \qquad s_i = \begin{pmatrix} X_{1i,LC} \\ X_{2i,LC} \\ Y_{i,LC} \\ Z_{i,LC} \\ K_{i,LC} \\ L_{i,LC} \end{pmatrix}$$

$$Y_{0i} = M_Y * s_i \qquad Y_{0i} = \begin{pmatrix} b_{11} & b_{12} & b_{13} & b_{14} & b_{15} & b_{16} \end{pmatrix} \begin{pmatrix} X_{1i,LC} \\ X_{2i,LC} \\ Y_{i,LC} \\ Z_{i,LC} \\ K_{i,LC} \\ L_{i,LC} \end{pmatrix}$$

$$D_{i,achrom} = \sqrt{(Y_{ref\,i} - Y_{0i})^2}$$

$$F_{achrom} = \sqrt{\frac{1}{m} \sum_{i=1}^{m} w_i D_{i,achrom}^2}$$

S51

minimize $F_{chrom}$

adjusting calibration factors $b_{11}$ to $b_{36}$ of set of calibration factors $M_Y$

$$M_Y = \begin{pmatrix} b_{11} & b_{12} & b_{13} & b_{14} & b_{15} & b_{16} \\ b_{21} & b_{22} & b_{23} & b_{24} & b_{25} & b_{26} \\ b_{31} & b_{32} & b_{33} & b_{34} & b_{35} & b_{36} \end{pmatrix}$$

S52

to choose the set of calibration factors that yields a minimal

$$F_{achrom} = \sqrt{\frac{1}{m} \sum_{i=1}^{m} w_i D_{i,achrom}^2}$$

S5

Fig. 4

EP 3 021 096 B1

Fig. 5

Fig. 6

Fig. 7

Fig. 8

EP 3 021 096 B1

Fig. ~~12~~ 9

**EP 3 021 096 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007177230 A1

**Non-patent literature cited in the description**

- **KOSZTYÁN et al.** Matrix-based color measurement correction of tristimulus colorimeters. *Applied Optics,* 20 April 2010, vol. 49 (12), 2288-2302